(19) Europäisches Patentamt
European Patent Office
Office européen des brevets

(11) **EP 3 827 125 B1**

(12) **FASCICULE DE BREVET EUROPEEN**

(45) Date de publication et mention de la délivrance du brevet:
**27.04.2022 Bulletin 2022/17**

(21) Numéro de dépôt: **19745594.2**

(22) Date de dépôt: **25.07.2019**

(51) Classification Internationale des Brevets (IPC):
**D07B 1/06** *(2006.01)*   **D02G 3/48** *(2006.01)*
**B60C 9/00** *(2006.01)*   **B60C 9/22** *(2006.01)*
**B60C 9/20** *(2006.01)*

(52) Classification Coopérative des Brevets (CPC):
(C-Sets disponibles)
**B60C 9/0007; D07B 1/0646;** B60C 2009/0071;
B60C 2009/0092; B60C 2009/2077;
B60C 2009/2093; B60C 2009/2096;
B60C 2009/2257; B60C 2009/228;
B60C 2009/2285; D07B 1/062; D07B 2201/2022;
D07B 2201/2029; D07B 2201/2039;
D07B 2205/3053;                              (Cont.)

(86) Numéro de dépôt international:
**PCT/EP2019/070032**

(87) Numéro de publication internationale:
**WO 2020/021006 (30.01.2020 Gazette 2020/05)**

(54) **CÂBLE OUVERT A HAUTE COMPRESSIBILITE**

HOCHKOMPRIMIERBARES OFFENE KABEL

HIGHLY COMPRESSIBLE OPEN CORD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2018 FR 1856914**

(43) Date de publication de la demande:
**02.06.2021 Bulletin 2021/22**

(73) Titulaire: **COMPAGNIE GENERALE DES ETABLISSEMENTS MICHELIN**
**63000 Clermont-Ferrand (FR)**

(72) Inventeurs:
• **CORNILLE, Richard**
  **63040 CLERMONT-FERRAND Cedex 9 (FR)**
• **BARGUET, Henri**
  **63040 CLERMONT-FERRAND Cedex 9 (FR)**

(74) Mandataire: **Louret, Sylvain et al**
**M.F.P. MICHELIN**
**Service juridique - Propriété Intellectuelle**
**DCJ/PI - F35 - Site de Ladoux**
**23, place des Carmes - Déchaux**
**63040 Clermont-Ferrand Cedex 9 (FR)**

(56) Documents cités:
WO-A1-2007/128335    WO-A1-2016/083265
WO-A1-2016/189073    CN-Y- 2 736 404
JP-A- H1 035 215     JP-A- H06 346 386

(52) Classification Coopérative des Brevets (CPC):
(Cont.)
D07B 2205/3057; D07B 2401/201

C-Sets
D07B 2205/3053;
D07B 2205/3057

**Description**

La présente invention est relative aux câbles métalliques utilisables pour le renforcement d'articles tels que des pneumatiques pour véhicules. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique un câble métallique comprenant une unique couche de N=5 éléments filaires métalliques enroulés en hélice. Chaque élément filaire métallique est constitué d'un monofilament en acier et présente un diamètre égal à 0,38 mm. Chaque élément filaire métallique est enroulé à un pas P=6,7 mm et est, préalablement à l'étape d'assemblage final en hélice des éléments filaires métalliques, individuellement préformé. Les éléments filaires métalliques définissent une voûte interne du câble. La préformation et la voûte interne procurent au câble, une fois assemblé, une aération relativement importante, autrement dit, un espace entre chaque paire d'éléments filaires métalliques adjacents relativement grand. Une telle aération engendre un allongement structural As du câble égal à 2,3 %. Un tel câble est notamment destiné à être utilisé dans des pneumatiques, par exemple des pneumatiques pour véhicule de type poids-lourds.

En plus de nécessiter une étape de préformation individuelle des éléments filaires métalliques, ce câble de l'état de la technique présente une compressibilité longitudinale relativement faible, c'est-à-dire que le câble flambe sous une déformation de compression longitudinale relativement faible. Un tel flambement se traduit par une flexion locale du câble, d'une part, faisant chuter la rigidité en compression du câble et, d'autre part, conduisant à un risque d'endommagement des éléments filaires métalliques sous les effets de cyclage que subissent par exemple les pneumatiques.

Un autre exemple de câble métallique comprenant une unique couche d'éléments filaires métalliques enroulés en hélice est décrit dans WO2016/166056. Dans WO2016/166056, un câble 3.26 comprend une unique couche de N=3 éléments filaires métalliques enroulés en hélice, chaque élément filaire métallique étant constitué d'un monofilament en acier et présente un diamètre égal à 0,26 mm. Tout comme le câble 5.38 décrit précédemment, le câble 3.26 de WO2016/166056 présente une compressibilité longitudinale relativement faible.

Un autre câble comprenant des éléments filaires métalliques est décrit dans WO 2016/083265.

L'invention a pour but de proposer des câbles comprenant une unique couche de N éléments filaires métalliques enroulés en hélice et présentant d'une part, une excellente compressibilité longitudinale, et d'autre part, un diamètre relativement faible par rapport aux diamètres des éléments filaires métalliques le constituant.

A cet effet, l'invention a pour objet, un câble tel que défini dans la revendication indépendante 1. Le câble selon l'invention comprend une unique couche d'éléments filaires métalliques enroulés en hélice, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est égale à la moitié du diamètre d'hélice Dh et est sensiblement constante et égale pour tous les éléments filaires métalliques de la couche, les éléments filaires métalliques définissant une voûte interne du câble de diamètre Dv, chaque élément filaire métallique présentant un diamètre Df et un rayon de courbure d'hélice Rf, Dh, Dv, Df et Rf étant exprimés en millimètres, le câble satisfaisant les relations suivantes :

$$9 \leq Rf / Df \leq 30,$$

et

$$1,30 \leq Dv / Df \leq 2,10.$$

Le câble selon l'invention présente, comme le démontre les essais comparatifs décrits ci-dessous, une excellente compressibilité longitudinale et, toutes choses étant égales par ailleurs, un diamètre relativement faible.

D'une part, les inventeurs à l'origine de l'invention émettent l'hypothèse que, du fait d'un rayon de courbure Rf suffisamment élevé par rapport au diamètre Df de chaque élément filaire métallique, le câble est suffisamment aéré, réduisant ainsi le risque de flambement, du fait de l'éloignement relativement important de chaque élément filaire métallique de l'axe longitudinal du câble, éloignement permettant aux éléments filaires métalliques une accommodation, de par leur hélice, des déformations de compression longitudinale relativement élevées. Au contraire, le rayon de courbure Rf de chaque élément filaire métallique du câble de l'état de la technique étant relativement faible par rapport au diamètre Df, les éléments filaires métalliques sont plus proches de l'axe longitudinal du câble et peuvent accommoder, de par leur hélice, des déformations de compression longitudinale bien moindres que le câble selon l'invention.

D'autre part, pour un rayon de courbure Rf de chaque élément filaire métallique trop élevé, le câble selon l'invention présenterait une rigidité longitudinale en compression insuffisante pour assurer un rôle de renforcement, par exemple de pneumatiques.

De plus, pour un diamètre Dv de voûte interne trop élevé, le câble présenterait, relativement au diamètre des éléments filaires métalliques, un diamètre trop élevé. A l'inverse, pour un diamètre Dv de voûte interne trop faible, le câble présenterait trop peu d'espace entre les éléments filaires métalliques pour que ces derniers puissent accommoder des déformations de compression longitudinale relativement élevées sans flamber.

Les valeurs des caractéristiques Dh, Df, Dv et Rf ainsi que des autres caractéristiques décrites ci-dessous sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subit une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électrochimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

Le câble selon l'invention comprend une unique couche d'éléments filaires métalliques enroulés en hélice. En d'autres termes, le câble selon l'invention comprend une seule, pas deux, ni plus de deux couches d'éléments filaires métalliques enroulés en hélice. La couche est constituée d'éléments filaires métalliques, c'est-à-dire plusieurs éléments filaires métalliques, pas d'un seul élément filaire métallique. Dans un mode de réalisation du câble, par exemple lorsque le câble est issu de son procédé de fabrication, le câble selon l'invention est constitué de la couche d'éléments filaires métalliques enroulés, autrement dit le câble ne comprend pas d'autre élément filaire métallique que ceux de la couche.

Le câble selon l'invention est à simple hélice. Par définition, un câble à simple hélice est un câble dans lequel l'axe de chaque élément filaire métallique de la couche décrit une unique hélice, contrairement à un câble à double hélice dans lequel l'axe de chaque élément filaire métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métallique enroulés ensemble en hélice, chaque élément filaire métallique de la couche décrivant une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément filaire métallique de la couche et l'axe principal soit sensiblement constante et égale pour tous les éléments filaires métalliques de la couche. Au contraire, lorsqu'un câble à double hélice s'étend selon une direction sensiblement rectiligne, la distance entre le centre de chaque élément filaire métallique de la couche et la direction sensiblement rectiligne est différente pour tous les éléments filaires métalliques de la couche.

Ainsi, le câble selon l'invention comprend une unique couche d'éléments filaires métalliques enroulés en hélice, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est égale à la moitié du diamètre d'hélice Dh et est sensiblement constante et égale pour tous les éléments filaires métalliques de la couche, les éléments filaires métalliques définissant une voûte interne du câble de diamètre Dv, chaque élément filaire métallique présentant un diamètre Df et un rayon de courbure d'hélice Rf défini par $Rf=P/(\pi \times Sin(2\alpha))$ avec P le pas de chaque élément filaire métallique exprimé en millimètres et $\alpha$ l'angle d'hélice de chaque élément filaire métallique, dans lequel Dh, Dv, Df et Rf étant exprimés en millimètres :

$$9 \leq Rf / Df \leq 30,$$

et

$$1{,}30 \leq Dv / Df \leq 2{,}10 \text{ avec } Dv=Dh-Df.$$

Le câble selon l'invention est dépourvu d'âme centrale métallique. On parle également de câble de structure 1xN dans laquelle N est le nombre d'éléments filaires métalliques ou bien encore de câble à structure ouverte (« open-cord » en anglais). Dans le câble selon l'invention défini ci-dessus, la voûte interne est vide et donc dépourvue de tout matériau de remplissage, notamment dépourvue de toute composition élastomérique. On parle alors d'un câble dépourvu de matériau de remplissage.

La voûte du câble selon l'invention est délimitée par les éléments filaires métalliques et correspond au volume délimité par un cercle théorique, d'une part, radialement intérieur à chaque élément filaire métallique et, d'autre part, tangent à chaque élément filaire métallique. Le diamètre de ce cercle théorique est égal au diamètre de voûte Dv.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément filaire métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

L'allongement structural As, grandeur bien connue de l'homme du métier, est déterminé par exemple en appliquant la norme ASTM D2969-04 de 2014 à un câble testé de façon à obtenir une courbe force-allongement. On déduit l'As sur la courbe obtenue comme l'allongement, en %, correspondant à la pente maximale de la courbe force-allongement. Pour rappel, une courbe force allongement comprend, en se déplaçant vers les allongements croissants, une partie structurale, une partie élastique et une partie plastique. La partie structurale correspond à l'allongement structural As résultant de l'aération du câble, c'est-à-dire l'espace vacant entre les différents éléments filaires métalliques constituants le câble. La partie élastique correspond à un allongement élastique résultant de la construction du câble, notamment des angles des différentes couches et des diamètres des fils. La partie plastique correspond à l'allongement plastique résultant de la plasticité (déformation irréversible au-delà de la limite d'élasticité) d'un ou plusieurs éléments filaires métalliques.

L'angle d'hélice $\alpha$ est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice a(i) est tel que a(i)=Arcos [ (100/(100+As) $\times$ Cos [ Arctan ( ($\pi$ $\times$ Df) / (P $\times$ Cos($\alpha$(i-1)) x Sin($\pi$/N)) ] ], formule dans laquelle P est le pas exprimé en millimètres auquel chaque élément filaire métallique est enroulé, N est le nombre d'éléments filaires métalliques de la couche, Df est le diamètre de chaque élément filaire métallique exprimé en millimètres, Arcos, Cos et Arctan et Sin désignant respectivement les fonctions arcosinus, cosinus, arctangente et sinus. Pour la première itération, c'est-à-dire pour le calcul de a(1), on prend a(0)=0. A la troisième itération, on obtient $\alpha$(3)=$\alpha$ avec au moins un chiffre significatif après la virgule quand $\alpha$ est exprimé en degrés.

Le diamètre d'hélice Dh, exprimé en millimètres, est calculé selon la relation Dh=P $\times$ Tan(a) / $\pi$ dans laquelle P est le pas exprimé en millimètres auquel chaque élément filaire métallique est enroulé, $\alpha$ est l'angle d'hélice de chaque élément filaire métallique déterminé ci-dessus et Tan la fonction tangente. Le diamètre d'hélice Dh correspond au diamètre du cercle théorique passant par les centres des éléments filaires métalliques de la couche dans un plan perpendiculaire à l'axe principal du câble.

Le diamètre de voûte Dv, exprimé en millimètres, est calculé selon la relation Dv=Dh-Df dans laquelle Df est le diamètre de chaque élément filaire métallique et Dh le diamètre d'hélice, tous deux exprimés en millimètres.

Le rayon de courbure Rf, exprimé en millimètres, est calculé selon la relation Rf=P/($\pi$ $\times$ Sin(2$\alpha$)) dans laquelle P est le pas exprimé en millimètres de chaque élément filaire métallique, $\alpha$ est l'angle d'hélice de chaque élément filaire métallique et Sin la fonction sinus.

On rappelle que le pas auquel chaque élément filaire métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Les caractéristiques optionnelles décrites ci-dessous pourront être combinées les unes avec les autres dans la mesure où de telles combinaisons sont techniquement compatibles.

Dans un mode de réalisation avantageux, tous les éléments filaires métalliques présentent le même diamètre Df.

Le câble est fabriqué conformément à un procédé et en mettant en œuvre une installation décrits dans les documents WO2016083265 et WO2016083267. Un tel procédé mettant en œuvre une étape de fractionnement est à distinguer d'un procédé de câblage classique comprenant une unique étape d'assemblage dans lequel les éléments filaires métalliques sont enroulés en hélice, l'étape d'assemblage étant précédée d'une étape de préformation individuelle de chaque élément filaire métallique afin notamment d'augmenter la valeur de l'allongement structural. De tels procédés et installations sont décrits dans les documents EP0548539, EP1000194, EP0622489, WO2012055677, JP2007092259, WO2007128335, JPH06346386 ou encore EP0143767. Lors de ces procédés, afin d'obtenir l'allongement structural le plus élevé possible, on préforme individuellement les monofilaments métalliques. Toutefois, cette étape de préformation individuelle des monofilaments métalliques, qui nécessite une installation particulière, d'une part, rend le procédé relativement peu productif par rapport à un procédé dépourvu d'étape de préformation indivduelle sans pour autant permettre d'atteindre des allongements structuraux élevés et, d'autre part, altère les monofilaments métalliques ainsi préformés en raison des frottements avec les outils de préformation. Une telle altération crée des amorces de ruptures en surface des monofilaments métalliques et est donc néfaste pour l'endurance des monofilaments métalliques, notamment pour leur endurance en compression. L'absence ou la présence de telles marques de préformation est observable au microscope électronique à l'issue du procédé de fabrication, ou bien plus simplement, en connaissant le procédé de fabrication du câble.

En raison du procédé utilisé, chaque élément filaire métallique du câble est dépourvu de marque de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé décrit dans WO2016083265 et WO2016083267 dans lequel les éléments filaires métalliques sont préformés collectivement et simultanément sur un noyau transitoire, les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par coupe radiale ou section radiale on entend ici une coupe ou une section selon un plan qui comporte l'axe de rotation du pneumatique.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Le plan médian (noté M) est le plan perpendiculaire à l'axe de rotation du pneumatique qui est situé à mi-distance des deux bourrelets et passe par le milieu de l'armature de sommet.

Le plan circonférentiel équatorial (noté E) du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales), l'axe parallèle à l'axe de rotation du pneumatique et situé à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans des modes de réalisation préférés, $11 \leq Rf / Df \leq 19$.

Dans des modes de réalisation préférés, $1,30 \leq Dv / Df \leq 2,05$ et plus préférentiellement $1,30 \leq Dv / Df \leq 2,00$.

Avantageusement, le rayon de courbure d'hélice Rf est tel que $2 \text{ mm} \leq Rf \leq 7 \text{ mm}$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a $2 \text{ mm} \leq Rf \leq 5 \text{ mm}$ et de préférence $3 \text{ mm} \leq Rf \leq 5 \text{ mm}$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $4 \text{ mm} \leq Rf \leq 6 \text{ mm}$ et de préférence $4 \text{ mm} \leq Rf \leq 5 \text{ mm}$.

Dans un mode de réalisation d'un câble destiné au renforcement d'un pneumatique pour véhicules hors-la-route, par exemple des engins agricoles ou de génie civil, on a $4 \text{ mm} \leq Rf \leq 7 \text{ mm}$ et de préférence $4,5 \text{ mm} \leq Rf \leq 6,5 \text{ mm}$.

Avantageusement, le diamètre d'hélice Dh de chaque élément filaire métallique est tel que $0,40 \text{ mm} \leq Dh \leq 1,50 \text{ mm}$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,50 mm ≤ Dh ≤ 1,00 mm et de préférence 0,70 mm ≤ Dh ≤ 1,00 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,85 mm ≤ Dh ≤ 1,20 mm et de préférence 0,90 mm ≤ Dh ≤ 1,15 mm.

Dans un mode de réalisation d'un câble destiné au renforcement d'un pneumatique pour véhicules hors-la-route, par exemple des engins agricoles ou de génie civil, on a 0,95 mm ≤ Dh ≤ 1,40 mm et de préférence 1,00 mm ≤ Dh ≤ 1,35 mm.

Avantageusement, Df est tel que 0,10 mm ≤ Df ≤ 0,50 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,20 mm ≤ Df ≤ 0,35 mm et de préférence 0,25 mm ≤ Df ≤ 0,33 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,22 mm ≤ Df ≤ 0,40 mm et de préférence 0,25 mm ≤ Df ≤ 0,38 mm.

Dans un mode de réalisation d'un câble destiné au renforcement d'un pneumatique pour véhicules hors-la-route, par exemple des engins agricoles ou de génie civil, on a 0,32 mm ≤ Df ≤ 0,50 mm et de préférence 0,35 mm ≤ Df ≤ 0,50 mm.

Avantageusement, Dv est tel que Dv ≥ 0,46 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,46 mm ≤ Dv ≤ 0,70 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,50 mm ≤ Dv ≤ 0,80 mm.

Dans un mode de réalisation d'un câble destiné au renforcement d'un pneumatique pour véhicules hors-la-route, par exemple des engins agricoles ou de génie civil, on a 0,55 mm ≤ Dv ≤ 1,00 mm.

Avantageusement, chaque élément filaire métallique est enroulé à un pas P tel que 3 mm ≤ P ≤ 15 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 3 mm ≤ P ≤ 9 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 7 mm ≤ P ≤ 15 mm.

Dans un mode de réalisation d'un câble destiné au renforcement d'un pneumatique pour véhicules hors-la-route, par exemple des engins agricoles ou de génie civil, on a 9 mm ≤ P ≤ 15 mm.

Avantageusement, le câble présente un diamètre D tel que D ≤ 2,00 mm.

Le diamètre ou diamètre apparent, noté D, est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,75 mm ≤ D ≤ 1,40 mm et de préférence 1,00 mm ≤ D ≤ 1,30 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 1,15 mm ≤ D ≤ 1,55 mm.

Dans un mode de réalisation d'un câble destiné au renforcement d'un pneumatique pour véhicules hors-la-route, par exemple des engins agricoles ou de génie civil, on a 1,5 mm ≤ D ≤ 2 mm.

Dans un mode de réalisation, chaque élément filaire métallique comprend un unique monofilament métallique. Ici, chaque élément filaire métallique est avantageusement constitué d'un monofilament métallique. Dans une variante de ce mode de réalisation, le monofilament métallique est directement revêtu d'une couche d'un revêtement métallique comprenant du cuivre, du zinc, de l'étain, du cobalt ou un alliage de ces métaux, par exemple le laiton ou le bronze. Dans cette variante, chaque élément filaire métallique est alors constitué du monofilament métallique, par exemple en acier, formant une âme, directement revêtu de la couche de revêtement métallique.

Dans ce mode de réalisation, chaque monofilament élémentaire métallique est, comme décrit-ci-dessus, de préférence en acier, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.

Avantageusement, la couche étant constituée de N éléments filaire métalliques enroulés en hélice, N va de 3 à 6.

Avantageusement, le rapport K du pas P sur le diamètre Df de chaque élément filaire métallique, P et Df étant exprimés en millimètres, est tel que $19 \leq K \leq 44$.

Avantageusement, l'angle d'hélice $\alpha$ de chaque élément filaire métallique est tel que $13° \leq \alpha \leq 21°$.

Pour des valeurs trop élevées du rapport K ou pour des valeurs d'angle d'hélice trop faibles, la compressibilité longitudinale du câble est réduite. Pour des valeurs trop faibles du rapport K ou pour des valeurs d'angle d'hélice trop élevées, la rigidité longitudinale du câble et donc sa capacité de renforcement sont réduite.

Avantageusement, le câble présente un allongement structural As tel que $As \geq 1\%$, de préférence $As \geq 2,5\%$, plus préférentiellement $As \geq 3\%$ et encore plus préférentiellement $3\% \leq As \leq 5,5\%$, l'allongement structural As étant déterminé en appliquant la norme ASTM D2969-04 de 2014 au câble de façon à obtenir une courbe force-allongement, l'allongement structural As étant égal à l'allongement, en %, correspondant à la pente maximale de la courbe force-allongement.

Avantageusement, chaque élément filaire métallique est dépourvu de marques de préformation. En d'autres termes, le câble est obtenu par un procédé dépourvu d'étapes de préformation individuelle de chacun des éléments filaires métalliques.

Comme décrit ci-dessus, le câble selon l'invention est fabriqué conformément à un procédé et en mettant en œuvre une installation décrits dans les documents WO2016083265 et WO2016083267. Ce procédé comprend une étape d'assemblage par retordage d'un assemblage transitoire comprenant M éléments filaires métalliques durant laquelle les M éléments de renfort métalliques sont préformés collectivement et simultanément sur un noyau transitoire, puis une étape de séparation de l'assemblage transitoire entre le noyau transitoire et le câble selon l'invention durant laquelle on sépare l'assemblage transitoire entre le noyau transitoire et au moins une partie des M éléments filaires métalliques de l'assemblage transitoire pour former le câble selon l'invention. Plus précisément, un tel procédé comprend une étape d'assemblage de M éléments filaires métalliques ensemble en une couche des M éléments filaires métalliques autour d'un noyau transitoire pour former un assemblage transitoire, et une étape de fractionnement de l'assemblage transitoire en au moins des premier et deuxième assemblages de M1 éléments filaires métalliques et M2 éléments filaires métalliques. Au moins l'un des premier et deuxième assemblages forme alors le câble selon l'invention, c'est-à-dire que M1=N et/ou M2=N.

En raison du retour élastique de chaque élément filaire métallique en réponse à l'étape de retordage, le pas de chaque élément filaire métallique de l'assemblage transitoire passe d'un pas transitoire au pas P qui lui est supérieur. L'homme du métier saura déterminer quel pas transitoire appliquer afin d'obtenir le pas P désiré.

De façon analogue, le diamètre d'hélice Dh de chaque élément filaire métallique dans le câble est sensiblement supérieur au diamètre d'hélice transitoire de chaque élément filaire dans l'assemblage transitoire et ce en raison du retour élastique. Le diamètre d'hélice Dh de chaque élément filaire métallique dans le câble est d'autant plus supérieur au diamètre d'hélice transitoire de chaque élément filaire dans l'assemblage transitoire que le taux de retordage est important. L'homme du métier saura déterminer quel diamètre d'hélice transitoire appliquer afin d'obtenir le diamètre d'hélice Dh désiré, et ce en fonction du taux de retordage et de la nature du noyau transitoire. Il en est de même pour le diamètre de voûte Dv.

Avantageusement, dans un premier mode de réalisation, l'étape de fractionnement de l'assemblage transitoire comprend une étape de séparation du noyau transitoire des premier et deuxième assemblages. Dans ce mode de réalisation, le premier assemblage est constitué de M1 éléments filaires métalliques enroulés ensemble et répartis en une seule couche autour de l'axe du premier assemblage. De façon analogue, le deuxième assemblage de ce mode de réalisation est constitué de M2 éléments filaires métalliques enroulés ensemble et répartis en une seule couche autour de l'axe du deuxième assemblage. En d'autres termes, dans ce premier mode de réalisation, le noyau transitoire comprenant au moins un élément filaire, chaque élément filaire du noyau transitoire n'appartient pas aux premier et deuxième assemblages de M1 éléments filaires métalliques et M2 éléments filaires métalliques. On a donc M1+M2=M.

Dans une première variante préférée de ce premier mode de réalisation, durant l'étape de fractionnement, on sépare le premier assemblage d'un ensemble transitoire formé par le deuxième assemblage et le noyau transitoire, puis on sépare le deuxième assemblage et le noyau transitoire l'un de l'autre. Dans une deuxième variante, durant l'étape de fractionnement, on sépare simultanément le noyau transitoire, le premier assemblage et le deuxième assemblage deux à deux les uns des autres.

Avantageusement, le procédé comprend une étape de recyclage du noyau transitoire durant laquelle:

- on récupère le noyau transitoire en aval de l'étape de fractionnement, et
- on introduit le noyau transitoire récupéré précédemment en amont de l'étape d'assemblage.

Dans un mode de réalisation préférentiel, l'étape de recyclage du noyau transitoire peut se faire en continu, c'est-à-dire dans laquelle on ré-introduit, sans étape de stockage intermédiaire du noyau transitoire, le noyau transitoire sortant de l'étape de séparation, dans l'étape d'assemblage. Dans un autre mode de réalisation, l'étape de recyclage du noyau transitoire est discontinue, c'est-à-dire avec une étape de stockage intermédiaire du noyau transitoire.

Plus préférentiellement, on utilise un noyau transitoire textile.

Dans un deuxième mode de réalisation, l'étape de fractionnement de l'assemblage transitoire comprend une étape de fractionnement du noyau transitoire entre au moins les premier et deuxième assemblages. Ainsi, dans ce deuxième mode de réalisation, on obtient deux assemblages d'éléments filaires métalliques comprenant chacun une couche respectivement de P1, P2 éléments filaires métalliques enroulés ensemble en hélice, et pour au moins un des assemblages, une âme centrale comprenant ou constituée d'au moins une partie du noyau transitoire autour de laquelle sont enroulés les éléments filaires métalliques de la couche. En d'autres termes, dans ce deuxième mode de réalisation, le noyau transitoire comprenant K élément(s) filaire(s) métallique(s), au moins un du ou des K élément(s) filaire(s) métallique(s) du noyau transitoire appartient à au moins l'un des premier et deuxième assemblages de M1 éléments filaires métalliques et M2 éléments filaires métalliques.

Avantageusement, durant l'étape de fractionnement, on fractionne au moins une première partie du noyau transitoire avec des premiers éléments filaires métalliques de l'assemblage transitoire de façon à former le premier assemblage.

Ainsi, le premier assemblage comprend une couche de P1 éléments filaires métalliques enroulés ensemble en hélice et une âme centrale comprenant ou constituée par une première partie (K1 élément(s) filaire(s)) des K éléments filaires métalliques du noyau transitoire et autour de laquelle sont enroulés ensemble en hélice les P1 éléments filaires métalliques. On a P1+K1=M1.

Avantageusement, durant l'étape de fractionnement, on fractionne au moins une deuxième partie du noyau transitoire avec des deuxièmes éléments filaires métalliques de l'assemblage transitoire de façon à former le deuxième assemblage.

Ainsi, le deuxième assemblage comprend une couche de P2 éléments filaires métalliques enroulés ensemble en hélice et une âme centrale comprenant ou constituée par une deuxième partie (K2 élément(s) filaire(s)) des K éléments filaires du noyau transitoire et autour de laquelle sont enroulés ensemble en hélice les P2 éléments filaires métalliques. On a P2+K2=M2.

De préférence, on forme simultanément les premier et deuxième assemblages.

De préférence, avant l'étape de fractionnement, les première et deuxième parties du noyau transitoire constituent le noyau transitoire. Ainsi, les première et deuxième parties du noyau transitoire sont complémentaires. On a donc K1+K2=K. Dans une variante, on pourrait avoir K1+K2<K.

Dans une variante, le premier assemblage comprend une couche de P1 éléments filaires métalliques enroulés ensemble en hélice autour d'une âme centrale comprenant ou constituée par le noyau transitoire et le deuxième assemblage comprend une couche de P2=M2 éléments filaires métalliques enroulés ensemble en hélice et dépourvu d'âme centrale.

Dans un mode de réalisation, on réalise l'étape d'assemblage par retordage. Dans un tel cas, les éléments filaires métalliques subissent à la fois une torsion collective et une torsion individuelle autour de leur propre axe, ce qui génère un couple de détorsion sur chacun des éléments filaires métalliques. Dans un autre mode de réalisation, on réalise l'étape d'assemblage par câblage. Dans ce cas, les éléments filaires métalliques ne subissent pas de torsion autour de leur propre axe, en raison d'une rotation synchrone avant et après le point d'assemblage.

De façon préférée, dans le cas d'une étape d'assemblage par retordage, le procédé comprend une étape d'équilibrage de l'assemblage transitoire. Ainsi, l'étape d'équilibrage étant réalisée sur l'assemblage constitué des M éléments filaires métalliques et du noyau transitoire, l'étape d'équilibrage est implicitement réalisée en amont de l'étape de fractionnement.

Avantageusement, le procédé comprend une étape d'équilibrage d'au moins un des premier et deuxième assemblages après l'étape de fractionnement.

Avantageusement, le procédé comprend une étape d'entretien de la rotation des premier et deuxième assemblages autour de leur direction de défilement respective. On réalise cette étape après l'étape de fractionnement et avant l'étape d'équilibrage d'au moins un des premier et deuxième assemblages.

L'invention a également pour objet l'utilisation d'un tel câble pour le renforcement d'articles ou produits semi-finis comprenant une matrice élastomérique dans laquelle est noyé le câble.

De tels articles ou produits semi-finis sont des tuyaux, des courroies, des bandes transporteuses, des chenilles, des pneumatiques pour véhicules, tant à l'état cru (c'est-à-dire avant réticulation ou vulcanisation) qu'à l'état cuit (après réticulation ou vulcanisation). De tels articles ou produits semi-finis prennent, dans des modes préférés, la forme d'une nappe.

L'invention a également pour objet un article ou produit semi-fini comprenant une matrice élastomérique dans laquelle est noyé au moins un câble tel que défini ci-dessus.

Un autre objet de l'invention est l'utilisation d'un câble tel que défini ci-dessus pour le renforcement d'un pneumatique comprenant le câble.

Enfin, l'invention a pour autre objet un pneumatique comprenant un élément filaire de renfort obtenu par noyage d'un câble tel que défini ci-dessus dans une matrice élastomérique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

Au sein du pneumatique selon l'invention, le câble est noyé dans la matrice élastomérique. Ainsi, au sein du pneumatique, le câble comprend un matériau de remplissage de la voûte interne à base d'une composition élastomérique et située dans la voûte interne du câble rempli. Le matériau de remplissage est ici à base de la même composition élastomérique que celle à base de de la matrice élastomérique dans laquelle est noyé le câble.

Les valeurs des caractéristiques Df, Dv, Rf ainsi que des autres caractéristiques décrites ci-dessus sont mesurées sur ou déterminées à partir de nappes et de câbles extraits d'un pneumatique. Les caractéristiques du câble décrites ci-dessus assurent, qu'à l'issue du procédé de fabrication du pneumatique, compte tenu de l'étape de conformation, le pneumatique présentera les avantages décrits ci-dessus.

Par matrice élastomérique, on entend une matrice à comportement élastomérique issue de la réticulation d'une composition élastomérique. La matrice élastomérique est ainsi à base de la composition élastomérique. Tout comme la matrice élastomérique, le matériau de remplissage est à base d'une composition élastomérique, ici la même composition que celle de la matrice dans laquelle est noyé le câble.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisées pour ces nappes sont des compositions conventionnelles pour calandrage d'éléments filaires de renfort, comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les éléments filaires de renfort et la matrice dans laquelle ils sont noyés est assurée par exemple par une composition adhésive usuelle, par exemple une colle du type RFL ou colle équivalente.

Le module sécant en traction d'une nappe pour une force égale à 15% de la force à rupture est notée $MA_{15}$ est exprimé en daN/mm. On calcule le module $MA_{15}$ à partir d'une courbe force-allongement obtenue en appliquant la norme ASTM D2969-04 de 2014 à un câble de la nappe. On calcule le module sécant en traction du câble en déterminant la pente de la droite tracée entre les points (0,0) et le point de la courbe présentant une ordonnée égale à 15% de la force à rupture. On détermine le module $MA_{15}$ en multipliant le module sécant en traction du câble par la densité de câbles par mm de nappe. On rappelle que la densité d d'éléments filaires de renfort dans une nappe est le nombre d'éléments filaires de renfort présents dans la nappe selon une direction perpendiculaire à la direction selon laquelle les éléments filaires de renfort s'étendent dans la nappe. La densité d peut également être déterminée à partir du pas de pose p exprimée en mm, le pas de pose étant égal à la distance axe à axe entre deux éléments filaires de renfort consécutifs selon la direction perpendiculaire à la direction selon laquelle les éléments de renfort s'étendent dans la nappe. La relation entre d et p est d=100/p.

La force à rupture d'un câble est mesurée selon la norme ASTM D2969-04 de 2014. On calcule la force à rupture d'une nappe à partir d'une courbe force-allongement obtenue en appliquant la norme ASTM D2969-04 de 2014 à un câble de la nappe. On détermine la force à rupture de la nappe en multipliant la force à rupture du câble par la densité de câbles par unité de largeur de la nappe, cette densité étant telle que définie précédemment.

Les caractéristiques optionnelles décrites ci-dessous pourront être combinées les unes avec les autres dans la mesure où de telles combinaisons sont techniquement compatibles.

Les pneumatiques de l'invention peuvent être destinés à des véhicules à moteur de tourisme (comprenant notamment les véhicules 4x4 et les "SUV" (Sport Utility Vehicles)), mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention. De façon très préférentielle, les pneumatiques de l'invention sont destinés à des véhicules de tourisme.

Avantageusement, le pneumatique comprend un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, l'armature de sommet comprenant un élément filaire de renfort obtenu par noyage d'un câble tel que défini ci-dessus dans une matrice élastomérique.

De préférence, l'armature de sommet comprend une armature de frettage comprenant au moins une nappe de frettage et préférentiellement une unique nappe de frettage. L'armature de frettage est constituée préférentiellement par une nappe de frettage. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

De préférence, l'armature de sommet comprend une armature de travail comprenant au moins une nappe de travail.

Dans un mode de réalisation, l'armature de frettage est radialement intercalée entre l'armature de travail et la bande de roulement. Ainsi, grâce à l'utilisation de câbles métalliques, l'armature de frettage exerce, en plus de sa fonction de frettage, une fonction de protection contre les perforations et les chocs bien plus efficace qu'une armature de frettage comprenant des éléments filaires de renfort de frettage textiles.

Avantageusement, la nappe de frettage comprend au moins un élément filaire de renfort de frettage obtenu par noyage d'un câble tel que défini ci-dessus dans une matrice élastomérique.

Grâce à son diamètre réduit, le câble permet de réduire les épaisseurs de la nappe de frettage, la masse de celle-ci, l'hystérèse du pneumatique et donc la résistance au roulement du pneumatique. En effet, toute chose étant égale par ailleurs, plus l'épaisseur de la nappe de frettage est importante, plus l'hystérèse de celle-ci est élevée. En réduisant le diamètre, on réduit l'épaisseur totale de la nappe tout en maintenant l'épaisseur présente au dos de chaque câble ce qui permet de maintenir les épaisseurs de découplage entre, d'une part, la bande de roulement et la nappe de frettage, et d'autre part, les nappes radialement intérieures à la nappe de frettage et la nappe de frettage. En outre, en maintenant l'épaisseur au dos de chaque câble constante, on conserve la résistance au passage des agents corrosifs au travers de la nappe de frettage ce qui permet de protéger l'armature de travail, protection d'autant plus intéressante dans le cas où l'armature de travail ne comprend qu'une unique nappe de travail.

De plus, grâce à son excellente compressibilité longitudinale, le câble permet de conférer au pneumatique une excellente endurance en compression, et ce de façon d'autant plus avantageuse dans le cas de la suppression d'une nappe de travail par rapport à un pneumatique de l'état de la technique décrit dans US2007006957. En outre, par rapport aux éléments filaires textiles de renfort de frettage de l'état de la technique décrit dans WO2016/166056, l'armature de frettage est, du fait de l'utilisation d'éléments filaires métalliques, moins chère, plus stable thermiquement et confère une protection mécanique au pneumatique. De plus, l'utilisation d'éléments filaires métalliques permet de faciliter le contrôle de l'armature de frettage par radiographie après sa fabrication. Enfin, par rapport au câble 3.26 de l'état de la technique décrit dans WO2016/166056, le câble du pneumatique selon l'invention présente une excellente compressibilité longitudinale et donc une endurance en compression largement supérieure.

Enfin, grâce à l'utilisation de câbles métalliques, l'armature de frettage exerce, en plus de sa fonction de frettage, une fonction de protection contre les perforations et les chocs bien plus efficace qu'une armature de frettage comprenant des éléments filaires de renfort de frettage textiles.

Avantageusement, le ou chaque élément filaire de renfort de frettage fait un angle strictement inférieur à 10°, de préférence inférieur ou égal à 7°, et plus préférentiellement inférieur ou égal à 5° avec la direction circonférentielle du pneumatique.

Avantageusement, la ou chaque nappe de travail comprend plusieurs éléments filaires de renfort de travail. De préférence, chaque élément filaire de renfort de travail est un élément filaire métallique.

De préférence, les éléments filaires de renfort de travail de chaque nappe sont agencés côte à côte sensiblement parallèlement les uns aux autres. Plus préférentiellement, chaque élément filaire de renfort de travail s'étend axialement d'une extrémité axiale de l'armature de travail du pneumatique à l'autre extrémité axiale de l'armature de travail du pneumatique.

De préférence, l'armature de carcasse comprend au moins une nappe de carcasse et plus préférentiellement une unique nappe de carcasse. L'armature de carcasse est préférentiellement constituée par une nappe de carcasse. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

Avantageusement, la nappe de carcasse comprend des éléments filaires de renfort de carcasse.

De préférence, chaque élément filaire de renfort de carcasse est un élément filaire textile. Par textile, on entend par définition un élément filaire non métallique constitué d'un ou plusieurs monofilament élémentaire textile éventuellement revêtu d'une ou plusieurs couches d'un revêtement à base d'une composition adhésive. Chaque monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

De préférence, chaque élément filaire de renfort de carcasse s'étend axialement d'un bourrelet du pneumatique à l'autre bourrelet du pneumatique.

Avantageusement, au moins les éléments filaires de renfort de travail et les éléments filaires de renfort de carcasse sont agencés de façon à définir, en projection sur un plan circonférentiel équatorial selon la direction radiale du pneumatique, un maillage triangulaire.

Dans un mode de réalisation avantageux, l'armature de sommet est constituée par l'armature de travail et l'armature de frettage.

Par nappe, on entend l'assemblage, d'une part, d'un ou de plusieurs éléments filaires de renfort et, d'autre part, d'une matrice élastomérique, le ou les éléments filaires de renfort étant noyés dans la matrice élastomérique.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Dans un premier mode de réalisation du pneumatique selon l'invention, l'armature de travail comprend deux nappes de travail et préférentiellement l'armature de travail est constituée de deux nappes de travail.

Dans ce premier mode de réalisation, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce premier mode de réalisation, les éléments filaires de renfort de frettage ne sont pas nécessaires pour définir le maillage triangulaire.

Avantageusement, dans ce premier mode de réalisation, chaque élément filaire de renfort de travail de chaque nappe de travail forme un angle allant de 10° à 40°, de préférence allant de 20° à 30° avec la direction circonférentielle du pneumatique.

Avantageusement, l'orientation de l'angle fait par les éléments filaires de renfort de travail avec la direction circonférentielle du pneumatique dans une nappe de travail est opposée à l'orientation de l'angle fait par les éléments filaires de renfort de travail avec la direction circonférentielle du pneumatique dans l'autre nappe de travail. En d'autres termes, les éléments filaires de renfort de travail d'une nappe de travail sont croisés avec les éléments filaires de renfort de travail de l'autre nappe de travail.

Avantageusement, chaque élément filaire de renfort de carcasse fait un angle supérieur ou égal à 80°, de préférence allant de 80° à 90° avec la direction circonférentielle du pneumatique dans le plan médian du pneumatique, autrement dit dans le sommet du pneumatique.

Avantageusement, chaque élément filaire de renfort de carcasse fait un angle supérieur ou égal à 80°, de préférence allant de 80° à 90° avec la direction circonférentielle du pneumatique dans le plan circonférentiel équatorial du pneumatique, autrement dit dans chaque flanc.

Dans un deuxième mode de réalisation de l'invention, l'armature de travail comprend une unique nappe de travail. L'armature de travail est préférentiellement constituée par une nappe de travail. Ce mode de réalisation est particulièrement avantageux lorsque le ou chaque élément filaire de renfort de frettage est constitué par câble tel que défini ci-dessus. Les propriétés de résistance mécanique et d'endurance de l'armature de frettage précédemment décrites permettent alors de supprimer une nappe de travail de l'armature de travail. On obtient un pneumatique significativement allégé.

Dans ce deuxième mode de réalisation, le ou les éléments filaires de renfort de frettage, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce deuxième mode de réalisation, contrairement au premier mode de réalisation, les éléments filaires de renfort de frettage sont nécessaires pour définir le maillage triangulaire.

Avantageusement, chaque élément filaire de renfort de carcasse fait un angle $A_{C1}$ supérieur ou égal à 55°, de préférence allant de 55° à 80° et plus préférentiellement allant de 60° à 70°, avec la direction circonférentielle du pneumatique dans le plan médian du pneumatique, autrement dit dans le sommet du pneumatique. Ainsi, les éléments filaires de renfort de carcasse, de par l'angle formé avec la direction circonférentielle, participe à la formation du maillage triangulaire dans le sommet du pneumatique.

Dans un mode de réalisation, chaque élément filaire de renfort de carcasse fait un angle $A_{C2}$ supérieur ou égal à 85° avec la direction circonférentielle du pneumatique dans le plan circonférentiel équatorial du pneumatique, autrement dit dans chaque flanc du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation, chaque élément filaire de renfort de travail fait un angle $A_T$ supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation du maillage triangulaire dans le sommet du pneumatique.

Afin de former un maillage triangulaire le plus efficace possible, l'orientation de l'angle $A_T$ et l'orientation de l'angle $A_{C1}$ sont préférentiellement opposées par rapport à la direction circonférentielle du pneumatique.

Que ce soit dans le premier ou le deuxième mode de réalisation décrit ci-dessus, avantageusement, la nappe de frettage présente avantageusement un module sécant en traction supérieur ou égal à 300 daN.mm$^{-1}$, de préférence supérieur ou égal à 350 daN.mm$^{-1}$ et plus préférentiellement supérieur ou égal à 400 daN.mm$^{-1}$ pour une force égale à 15% de la force à rupture de la nappe de frettage. Dans un mode de réalisation, la nappe de frettage présente avantageusement un module sécant en traction inférieur ou égal à 500 daN.mm$^{-1}$, de préférence inférieur ou égal à 450 daN.mm$^{-1}$ pour une force égale à 15% de la force à rupture de la nappe de frettage.

Que ce soit dans le premier ou le deuxième mode de réalisation décrit ci-dessus, avantageusement, la force à rupture de la nappe de frettage est supérieure ou égale à 55 daN.mm$^{-1}$, de préférence supérieure ou égale à 60 daN.mm$^{-1}$ et plus préférentiellement supérieure ou égale à 65 daN.mm$^{-1}$. Avantageusement, la force à rupture de la nappe de frettage est inférieure ou égale à 85 daN.mm$^{-1}$, de préférence inférieure ou égale à 80 daN.mm$^{-1}$ et plus préférentiellement inférieure ou égale à 75 daN.mm$^{-1}$.

## PROCEDE DE FABRICATION DU PNEUMATIQUE SELON L'INVENTION

On fabrique le pneumatique selon l'invention selon le procédé décrit ci-dessous.

Tout d'abord, on fabrique chaque nappe de carcasse, chaque nappe de travail et chaque nappe de frettage. On fabrique chaque nappe en noyant les éléments filaires de renfort de chaque nappe dans une composition élastomérique non réticulée.

Puis, on agence l'armature de carcasse, l'armature de travail, l'armature de frettage et la bande de roulement de façon à former une ébauche de pneumatique.

Ensuite, on conforme l'ébauche de pneumatique de façon à agrandir au moins radialement l'ébauche de pneumatique. Cette étape a pour effet d'allonger circonférentiellement chaque nappe de l'ébauche de pneumatique. Cette étape a pour effet d'allonger le ou chaque élément filaire de renfort de frettage selon la direction circonférentielle du pneumatique. Ainsi, le ou chaque élément filaire de renfort de frettage présente, avant l'étape de conformation, des caractéristiques différentes de celles après l'étape de conformation.

Comme déjà décrit, les caractéristiques du câble dépourvu de matériau de remplissage décrites ci-dessus assurent, qu'à l'issue du procédé de fabrication du pneumatique, compte tenu de l'étape de conformation, le pneumatique présentera les avantages décrits ci-dessus.

Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

L'invention sera mieux comprise à la lecture de la description qui va suivre, donnée uniquement à titre d'exemple non limitatif et faite en se référant aux dessins dans lesquels:

- la figure 1 est une vue en coupe radiale d'un pneumatique selon un premier mode de réalisation de l'invention ;
- la figure 2 est une vue en arraché du pneumatique de la figure 1 illustrant la projection sur le plan circonférentiel équatorial E des éléments filaires de renfort de frettage, des éléments filaires de renfort de travail et des éléments filaires de renfort de carcasse ;
- la figure 3 est une vue des éléments filaires de renfort de carcasse agencés dans le flanc du pneumatique de la figure 1 en projection sur le plan médian M du pneumatique ;
- la figure 4 est une vue en coupe perpendiculaire à son axe d'un câble selon un premier mode de réalisation de l'invention (supposé rectiligne et au repos) ;
- la figure 5 est une vue en perspective du câble de la figure 4 ;
- la figure 6 illustre une courbe force-allongement du câble des figures 4 et 5 ;
- la figure 7 illustre une courbe représentant la variation de la dérivée de la courbe de la figure 6 en fonction de l'allongement ;
- les figures 8 et 9 sont des figures analogues aux figures 4 et 5 d'un câble selon un deuxième mode de réalisation ;
- la figure 10 est une vue analogue à celle de la figure 1 d'un pneumatique selon un deuxième mode de réalisation de l'invention ;
- les figures 11 et 12 sont des vues analogues à celles des vues des figures 2 et 3 du pneumatique de la figure 10 selon le deuxième mode de réalisation de l'invention.

## PNEUMATIQUE SELON UN PREMIER MODE DE REALISATION DE L'INVENTION

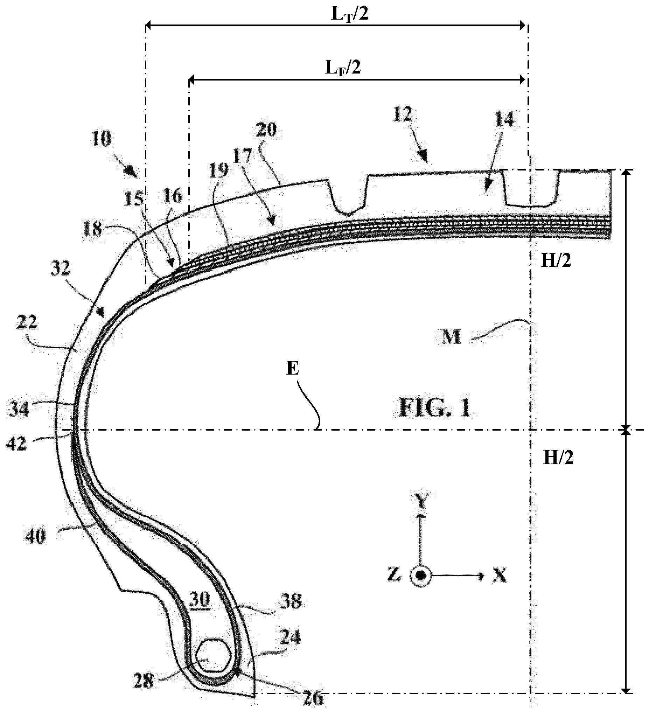

Sur la figure 1, on a représenté un repère X, Y, Z correspondant aux directions habituelles respectivement axiale (X), radiale (Y) et circonférentielle (Z) d'un pneumatique.

On a représenté schématiquement sur la figure 1, une vue en coupe radiale, d'un pneumatique selon l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 comprenant respectivement des éléments filaires de renfort de travail 46, 47 et une armature de frettage 17 comprenant une nappe de frettage 19 comprenant au moins un élément filaire de renfort de frettage 48. L'armature de sommet 14 s'étend dans le sommet 12 selon la direction circonférentielle Z du pneumatique 10. Le sommet 12 comprend une bande de roulement 20 agencée radialement extérieure à l'armature de sommet 14. Ici, l'armature de frettage 17, ici la nappe de frettage 19, est radialement intercalée entre l'armature de travail 15 et la bande de roulement 20. Ici, l'armature de travail 15 comprend uniquement deux nappes de travail 16, 18 et l'armature de frettage 17 comprenant une unique nappe de frettage 19. Ici, l'armature de travail 15 est constituée des deux nappes de travail 16, 18 et l'armature de frettage 17 est constituée de la nappe de frettage 19. L'armature de sommet 14 est constituée par l'armature de travail 15 et l'armature de frettage 17.

Le pneumatique 10 comprend également deux flancs 22 prolongeant le sommet 12 radialement vers l'intérieur. Le pneumatique 10 comporte en outre deux bourrelets 24 radialement intérieur aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32. Chaque flanc 22 relie chaque bourrelet 24 au sommet 12.

L'armature de carcasse 32 comporte une nappe de carcasse 34 comprenant plusieurs éléments filaires de renfort de carcasse 44, la nappe de carcasse 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 dans et à travers les flancs 22 jusque dans le sommet 12. L'armature de carcasse 32 est agencée radialement à l'intérieur de l'armature de sommet 14 et de l'armature de frettage 17. L'armature de sommet 14 est donc radialement intercalée entre l'armature de carcasse 32 et la bande de roulement 20. L'armature de carcasse 32 comprend une seule et unique nappe carcasse 34. Ici, l'armature de carcasse 32 est constituée de la nappe de carcasse 34.

Le pneumatique 10 comprend également une couche interne 46 d'étanchéité, de préférence en butyl, située axialement intérieure aux flancs 22 et radialement intérieure à l'armature de sommet 14 et s'étendant entre les deux bourrelets 24.

Chaque nappe de travail 16, 18, de frettage 19 et de carcasse 34 comprend une matrice élastomérique dans laquelle sont noyés des éléments de renfort de la nappe correspondante. Chaque matrice élastomérique des nappes de travail 16, 18, de frettage 19 et de carcasse 34 est à base d'une composition élastomérique conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

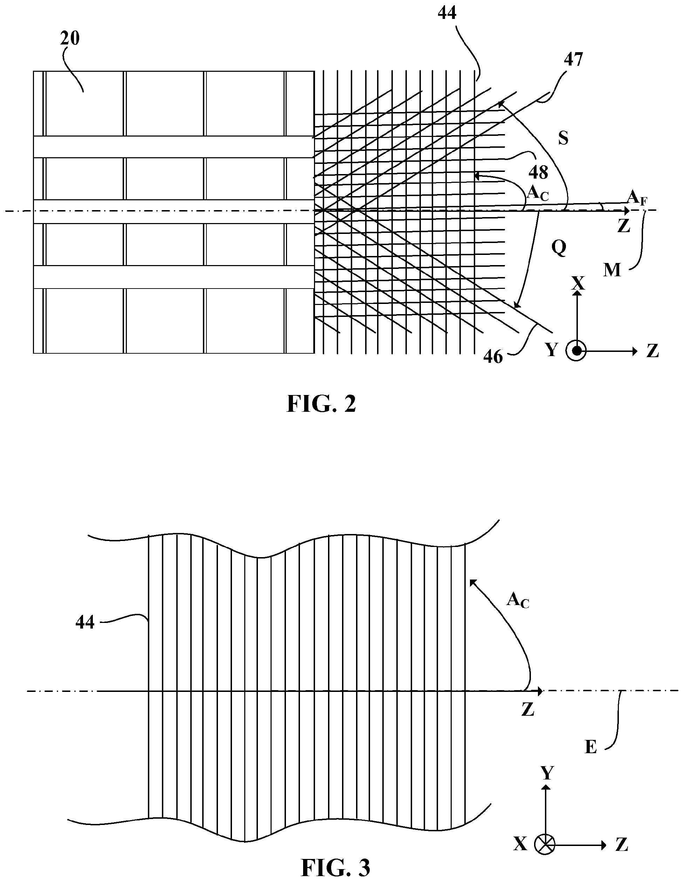

En référence aux figures 2 et 3, chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle Ac supérieur ou égal à 80°, de préférence allant de 80° à 90°, avec la direction circonférentielle Z du pneumatique 10 dans les plans médian M et circonférentiel équatorial E du pneumatique 10, autrement dit dans le sommet 12 et dans chaque flanc 22.

En référence à la figure 2, les éléments filaires de renfort de travail 46, 47 de chaque nappe de travail 16, 18 sont agencés côte à côte sensiblement parallèlement les uns aux autres. Chaque élément filaire de renfort de travail 46, 47 s'étend axialement d'une extrémité axiale de l'armature de travail 15 du pneumatique 10 à l'autre extrémité axiale de l'armature de travail 15 du pneumatique 10. Chaque élément filaire de renfort de travail 46, 48 fait un angle allant de 10° et 40°, de préférence allant de 20° à 30° et ici égal à 26° avec la direction circonférentielle Z du pneumatique 10 dans le plan médian M. L'orientation de l'angle S fait par les éléments filaires de renfort de travail 46 avec la direction circonférentielle Z du pneumatique 10 dans la nappe de travail 16 est opposée à l'orientation de l'angle Q fait par les éléments filaires de renfort de travail 47 avec la direction circonférentielle Z du pneumatique 10 dans l'autre nappe de travail 18. En d'autres termes, les éléments filaires de renfort de travail 46 de nappe de travail 16 sont croisés avec les éléments filaires de renfort de travail 47 de l'autre nappe de travail 18..

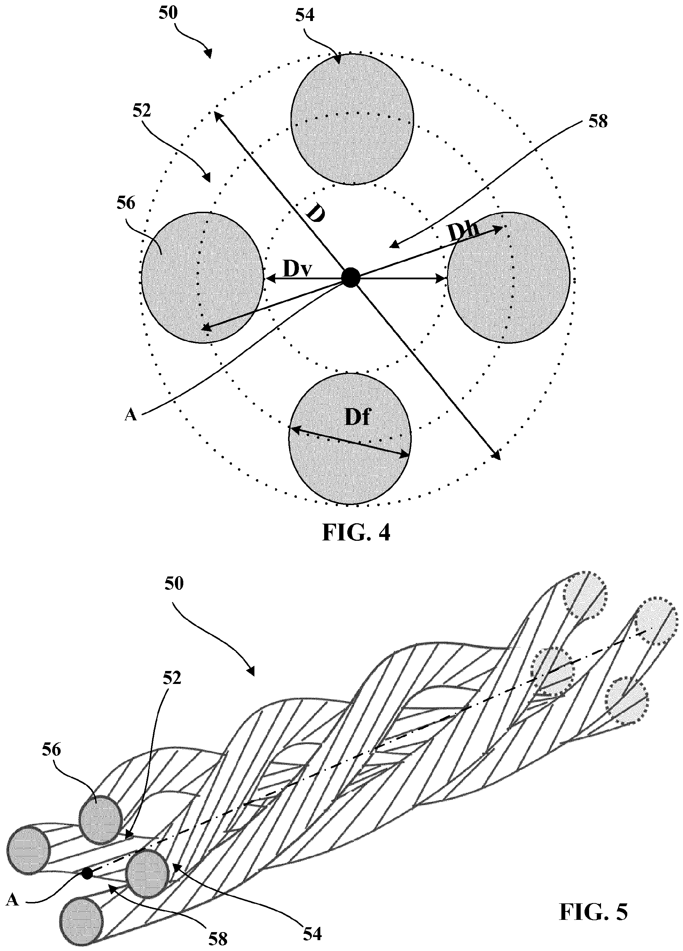

En référence à la figure 2, l'unique nappe de frettage 19 comprend au moins l'élément filaire de renfort de frettage 48 obtenu par noyage du câble 50 dans une matrice élastomérique à base de la composition élastomérique de la nappe de frettage 19 et tel qu'illustré aux figures 4 et 5 et décrits plus en détails ci-dessous. Etant noyé dans la matrice de la nappe de frettage 19, le câble 50, au sein du pneumatique 10, comprend un matériau de remplissage de la voûte interne 58 à base de la composition élastomérique de la nappe de frettage 19, ce matériau de remplissage 53 étant située dans la voûte interne 58 du câble 50. En l'espèce, la nappe de frettage 19 comprend un unique élément filaire de renfort de frettage 48 enroulé continument sur une largeur axiale $L_F$ du sommet 12 du pneumatique 10. Avantageusement, la largeur axiale $L_F$ est inférieure à la largeur $L_T$ de la nappe de travail 18. L'élément filaire de renfort de frettage 48 fait un angle $A_F$ strictement inférieur à 10° avec la direction circonférentielle Z du pneumatique 10, de préférence inférieur ou égal à 7°, et plus préférentiellement inférieur ou égal à 5°. En l'espèce, l'angle est ici égal à 5°.

Les éléments filaires de renfort de carcasse 44 et de travail 46, 47 sont agencés, dans le sommet 12, de façon à définir, en projection sur le plan circonférentiel équatorial E selon la direction radiale du pneumatique, un maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m$^{-1}$ dans un sens puis retordus ensemble à 240 tours.m$^{-1}$ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46, 47 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

## CABLE SELON UN PREMIER MODE DE REALISATION DE L'INVENTION

En référence aux figures 4 et 5, le câble 50 selon l'invention comprend une unique couche 52 d'éléments filaires métalliques 54 enroulés en hélice. En l'espèce, le câble 50 est constitué de l'unique couche 52, autrement dit le câble 50 ne comprend pas d'autre élément filaire métallique que ceux de la couche 52. La couche 52 est constituée de N éléments filaires métalliques enroulés en hélice, N allant de 3 à 6 et ici N=4. Le câble 50 présente un axe principal A s'étendant sensiblement parallèlement à la direction selon laquelle le câble s'étend selon sa plus grande longueur. Chaque élément filaire métallique 54 de la couche 52 décrit, lorsque le câble 50, s'étend selon une direction sensiblement rectiligne, une trajectoire en forme d'hélice autour de l'axe principal A sensiblement parallèle à la direction sensiblement rectiligne, de sorte que, dans un plan de coupe sensiblement perpendiculaire à l'axe principal A, la distance entre le centre de chaque élément filaire métallique 54 de la couche 52 et l'axe principal A est sensiblement constante et égale pour tous les éléments filaires métalliques 54 de la couche 52. Cette distance constante entre le centre de chaque élément filaire métallique 54 de la couche 52 et l'axe principal A est égale à la moitié du diamètre d'hélice Dh.

Dans le mode de réalisation illustré, chaque élément filaire métallique 54 comprend un unique monofilament métallique 56. Chaque élément filaire métallique 54 comprend également une couche (non représentée) d'un revêtement métallique comprenant du cuivre, du zinc, de l'étain, du cobalt ou un alliage de ces métaux, ici du laiton. Chaque monofilament métallique 56 est en acier au carbone et présente une résistance mécanique à rupture ici égale à 3100 MPa.

Le diamètre Df de chaque élément filaire métallique 54 est tel que 0,10 mm ≤ Df ≤ 0,50 mm, de préférence 0,20 mm ≤ Df ≤ 0,35 mm et plus préférentiellement 0,25 mm ≤ Df ≤ 0,33 mm et ici Df=0,32 mm pour tous les éléments filaires métalliques 54. Chaque élément filaire métallique 54 est dépourvu de marques de préformation.

Le câble 50 présente un diamètre D tel que D ≤ 2,00 mm, de préférence 0,75 mm ≤ D ≤ 1,40 mm et plus préférentiellement 1,00 mm ≤ D ≤ 1,30 mm et ici D=1,27 mm.

Avantageusement, chaque élément filaire métallique 54 est enroulé à un pas P tel que 3 mm ≤ P ≤ 15 mm, de préférence 3 mm ≤ P ≤ 9 mm et ici P=8 mm.

Le rapport K du pas P sur le diamètre Df de chaque élément filaire métallique, P et Df étant exprimés en millimètres, est tel que 19 ≤ K ≤ 44 et ici K=25.

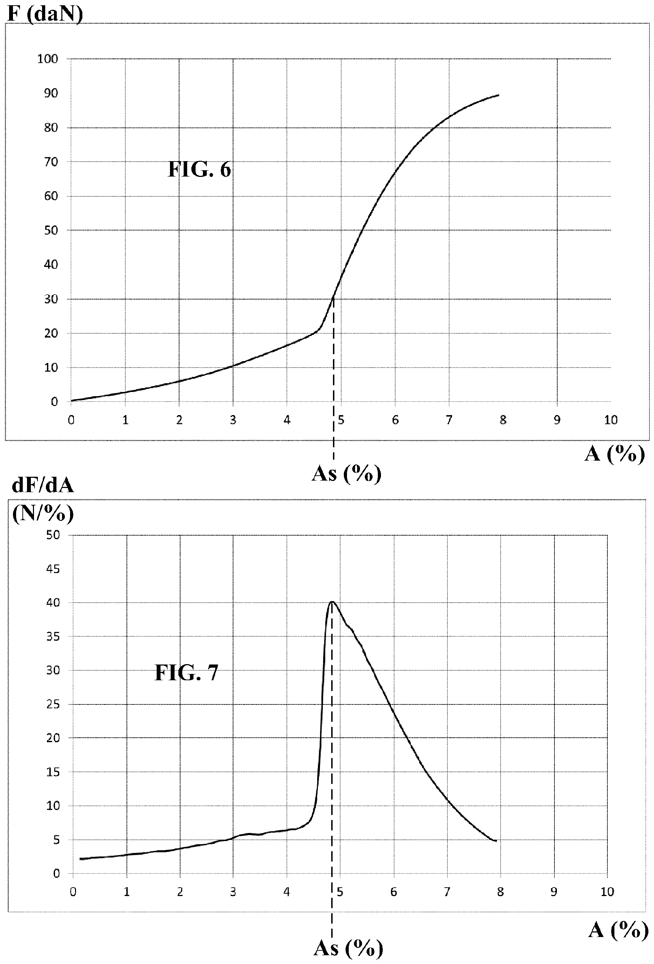

Le câble 50 selon le premier mode de réalisation présente un allongement structural As tel que As ≥ 1%, de préférence tel que As ≥ 1%, de préférence As ≥ 2,5%, plus préférentiellement As ≥ 3% et encore plus préférentiellement 3% ≤ As ≤ 5,5% et ici égal à 4,8%. Comme décrit précédemment, on détermine la valeur As en traçant une courbe force-allongement du câble en appliquant la norme ASTM D2969-04 de 2014. On a représenté la courbe obtenue sur la figure 6. Puis, de cette courbe force allongement, on en déduit la variation de la dérivée de cette courbe force allongement. On a représenté sur la figure 7 la variation de cette dérivée en fonction de l'allongement. Le point de dérivée la plus élevée correspond alors à la valeur As.

L'angle d'hélice $\alpha$ de chaque élément filaire métallique est tel que 13° ≤ $\alpha$ ≤ 21°. En l'espèce, tel que décrit précédemment, avec les caractéristiques du câble 50, on a $\alpha(1)$=20,05°, $\alpha(2)$=20,36° et $\alpha(3)=\alpha$=20,37°.

Chaque élément filaire métallique 54 présente un rayon de courbure d'hélice Rf tel que 2 mm ≤ Rf ≤ 7 mm, de préférence 2 mm ≤ Rf ≤ 5 mm et plus préférentiellement 3 mm ≤ Rf ≤ 5 mm. Le rayon de courbure Rf est calculé selon la relation Rf=P/($\pi \times$ Sin(2$\alpha$)). Comme ici P=8 mm et $\alpha$=20,37°, Rf=3,90 mm.

Le diamètre d'hélice Dh de chaque élément filaire métallique est tel que 0,40 mm ≤ Dh ≤ 1,50 mm, de préférence 0,50 mm ≤ Dh ≤ 1,00 mm et plus préférentiellement 0,70 mm ≤ Dh ≤ 1,00 mm. Le diamètre d'hélice Dh est calculé selon la relation Dh=P $\times$ Tan(a) / $\pi$. Comme ici P=8 mm et $\alpha$=20,37°, Dh=0,95 mm.

Les éléments filaires métalliques 54 définissent une voûte interne 58 du câble 50 de diamètre Dv. Le diamètre de voûte Dv est calculé selon la relation Dv=Dh-Df dans laquelle Df est le diamètre de chaque élément filaire métallique et Dh le diamètre d'hélice. Avantageusement, Dv est tel que Dv ≥ 0,46 mm et de préférence 0,46 mm ≤ Dv ≤ 0,70 mm. Ici, comme Dh=0,95 mm et Df=0,32 mm, on a Dv=0,63 mm.

Conformément à l'invention, on a 9 ≤ Rf / Df ≤ 30, et de façon préférée 11 ≤ Rf / Df ≤ 19. Ici Rf / Df=12,2. Conformément à l'invention, on a également 1,30 ≤ Dv / Df ≤ 2,1, de préférence 1,30 ≤ Dv / Df ≤ 2,05 et plus préférentiellement 1,30 ≤ Dv / Df ≤ 2,00 et ici Dv / Df=1,97.

## CABLE SELON UN DEUXIEME MODE DE REALISATION DE L'INVENTION

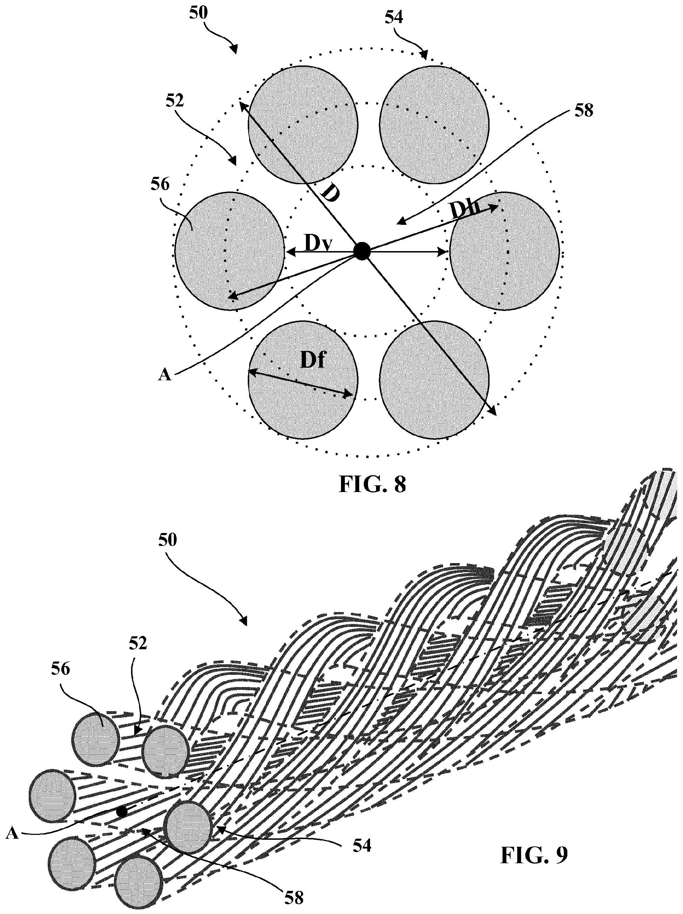

On va maintenant décrire un deuxième mode de réalisation d'un câble du pneumatique selon l'invention. Ce câble, désigné par la référence 50', est illustré sur les figures 8 et 9. Les éléments analogues à ceux du premier mode de réalisation représentés sur les figures précédentes sont désignés par des références identiques.

Le câble 50' comprend une unique couche 52 d'éléments filaires métalliques 54 enroulés en hélice. La couche 52 est constituée de N=6 éléments filaire métalliques enroulés en hélice.

Dans le mode de réalisation illustré, chaque élément filaire métallique 54 comprend un unique monofilament métallique 56. Chaque élément filaire métallique 54 comprend également une couche (non représentée) d'un revêtement métallique comprenant du cuivre, du zinc, de l'étain, du cobalt ou un alliage de ces métaux, ici du laiton.

Le diamètre Df de chaque élément filaire métallique 54 est tel que 0,10 mm ≤ Df ≤ 0,50 mm, de préférence 0,20 mm ≤ Df ≤ 0,35 mm et plus préférentiellement 0,25 mm ≤ Df ≤ 0,33 mm et ici Df=0,32 mm pour tous les éléments filaires métalliques 54. Chaque élément filaire métallique 54 est dépourvu de marques de préformation.

Le câble 50' présente un diamètre D tel que D ≤ 2,00 mm, de préférence 0,75 mm ≤ D ≤ 1,30 mm et plus préférentiellement 1,00 mm ≤ D ≤ 1,20 mm et ici D=1,15 mm.

Avantageusement, chaque élément filaire métallique 54 est enroulé à un pas P tel que 3 mm ≤ P ≤ 15 mm, de préférence 3 mm ≤ P ≤ 9 mm et ici P=8 mm.

Le rapport K du pas P sur le diamètre Df de chaque élément filaire métallique, P et Df étant exprimés en millimètres, est tel que 19 ≤ K ≤ 44 et ici K=25.

En raison du nombre élevé d'éléments filaires métalliques du câble 50' et de son diamètre relativement petit, le câble 50' présente un allongement structural As relativement modéré ici égal à 1,6 %.

L'angle d'hélice $\alpha$ de chaque élément filaire métallique est tel que 13° ≤ $\alpha$ ≤ 21°.

En l'espèce, tel que décrit précédemment, avec les caractéristiques du câble 50', on a $\alpha$(1)=17,35°, $\alpha$(2)=17,87° et $\alpha$(3)=$\alpha$=17,9°.

Chaque élément filaire métallique 54 présente un rayon de courbure d'hélice Rf tel que 2 mm ≤ Cf ≤ 7 mm, de préférence 2 mm ≤ Rf ≤ 5 mm et plus préférentiellement 3 mm ≤ Rf ≤ 5 mm. Le rayon de courbure Rf est calculé selon la relation Rf=P/($\pi \times$ Sin(2$\alpha$)). Comme ici P=8 mm et $\alpha$=17,9°, Rf=4,36 mm.

Le diamètre d'hélice Dh de chaque élément filaire métallique est tel que 0,40 mm ≤ Dh ≤ 1,50 mm, de préférence 0,50 mm ≤ Dh ≤ 0,90 mm et plus préférentiellement 0,70 mm ≤ Dh ≤ 0,90 mm. Le diamètre d'hélice Dh est calculé comme dans le premier mode de réalisation, et comme ici P=8 mm et $\alpha$=17,9°, Dh=0,82 mm.

Le diamètre de voûte Dv est calculé comme dans le premier mode de réalisation. Avantageusement, Dv est tel que Dv ≥ 0,46 mm et de préférence 0,46 mm ≤ Dv ≤ 0,60 mm. Ici, comme Dh=0,82 mm et Df=0,32 mm, on a Dv=0,50 mm.

Conformément à l'invention, on a 9 ≤ Rf / Df ≤ 30, et de façon préférée 11 ≤ Rf / Df ≤ 19. Ici Rf / Df=13,6. Conformément à l'invention, on a également 1,30 ≤ Dv / Df ≤ 2,1, de préférence 1,30 ≤ Dv / Df ≤ 2,05 et plus préférentiellement 1,30 ≤ Dv / Df ≤ 2,00 et ici Dv / Df=1,56.

## PROCEDE DE FABRICATION DU PNEUMATIQUE SELON LE PREMIER MODE DE REALISATION

On fabrique le pneumatique 10 selon le procédé décrit ci-dessous.

Tout d'abord, on fabrique la nappe de travail 18 et la nappe de carcasse 34 en agençant parallèlement les uns aux autres les éléments filaires de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires de renfort de la nappe sont parallèles les uns aux autres et forment un angle avec la direction principale de la nappe égal à l'angle de découpe.

Puis, on met en œuvre un procédé d'assemblage, durant lequel on agence l'armature de frettage 17, ici la nappe de frettage 19, radialement à l'extérieur de l'armature de travail 15. En l'espèce, dans une première variante, on fabrique une bandelette de largeur B significativement inférieure à $L_F$, dans laquelle l'élément filaire de renfort de frettage 48 formé par un câble 50 est noyé dans la matrice élastomérique à base de la composition élastomérique non réticulée de la bandelette et on enroule hélicoïdalement la bandelette sur plusieurs tours de façon à obtenir la largeur axiale $L_F$. Dans une deuxième variante, on fabrique la nappe de frettage 19 présentant une largeur $L_F$ d'une façon analogue aux nappes de carcasse et de travail et on enroule sur un tour la nappe de frettage 19 sur l'armature de travail 15. Dans une troisième variante, on enroule l'élément filaire de renfort de frettage 48 formé par le câble 50 radialement à l'extérieur de la nappe de travail 18, puis on dépose dessus une couche à base de la composition élastomérique non réticulée de la nappe de frettage 19 et dans laquelle sera noyé l'élément filaire de renfort de frettage 48 formé par le câble 50 lors de la cuisson du pneumatique. Dans les trois variantes, on noie l'élément filaire de renfort adhérisé 48 formé par le câble 50 dans une composition pour former, à l'issue du procédé de fabrication du pneumatique, la nappe de frettage 19 comprenant l'élément filaire de renfort de frettage 48 formé par le câble 50.

Puis, on agence l'armature de carcasse, l'armature de travail, l'armature de frettage et la bande de roulement de façon à former une ébauche de pneumatique dans laquelle les compositions des matrices élastomériques ne sont pas encore réticulées et sont dans un état cru.

Ensuite, on conforme l'ébauche de pneumatique de façon à agrandir au moins radialement l'ébauche de pneumatique. Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

## PNEUMATIQUE SELON UN DEUXIEME MODE DE REALISATION DE L'INVENTION

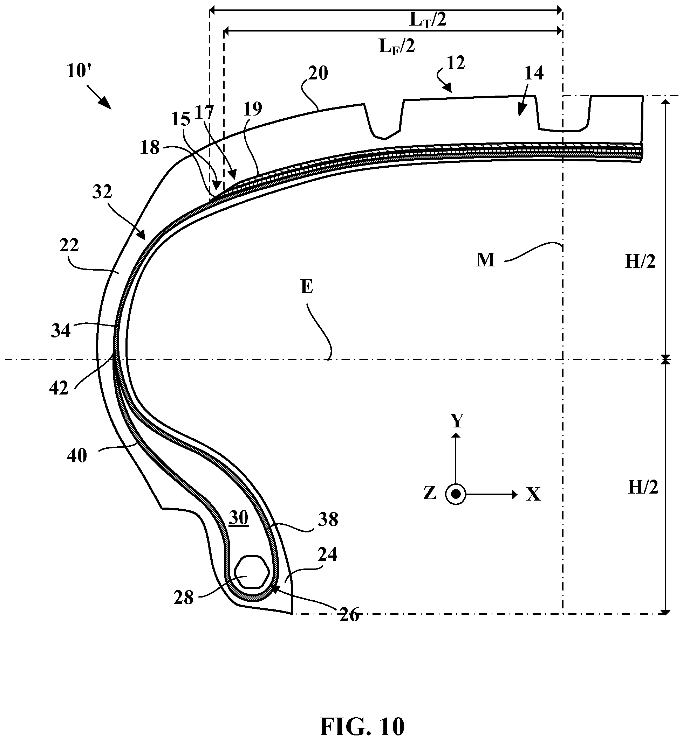

On a représenté sur les figures 10 à 12 un pneumatique 10' selon un deuxième mode de réalisation de l'invention. Sur ces figures, les éléments analogues à ceux du pneumatique 10 selon le premier mode de réalisation sont désignés par des références identiques.

Le pneumatique 10' est sensiblement de révolution autour d'un axe sensiblement parallèle à la direction axiale X. Le pneumatique 10' est ici destiné à un véhicule de tourisme.

Le pneumatique 10' comporte un sommet 12 comprenant une bande de roulement 20 et une armature de sommet 14 s'étendant dans le sommet 12 selon la direction circonférentielle Z.

L'armature de sommet 14 comprend une armature de travail 15 comprenant une unique nappe de travail 18 et une armature de frettage 17 comprenant une unique nappe de frettage 19. Ici, l'armature de travail 15 est constituée de la nappe de travail 18 et l'armature de frettage 17 est constituée de la nappe de frettage 19. L'armature de sommet 14 est constituée par l'armature de travail 15 et l'armature de frettage 17.

L'armature de sommet 14 est surmontée de la bande de roulement 20. Ici, l'armature de frettage 17, ici la nappe de frettage 19, est radialement intercalée entre l'armature de travail 15 et la bande de roulement 20.

Le pneumatique 10' comprend deux flancs 22 prolongeant le sommet 12 radialement vers l'intérieur. Le pneumatique 10' comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte une unique nappe de carcasse 34. Ici, l'armature de carcasse 32 est constituée de la nappe de carcasse 34. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12. L'armature de sommet 14 est radialement intercalée entre l'armature de carcasse 32 et la bande de roulement 20.

Chaque nappe de travail 18, de frettage 19 et de carcasse 34 comprend une matrice élastomérique dans laquelle sont noyés un ou des éléments de renfort de la nappe correspondante.

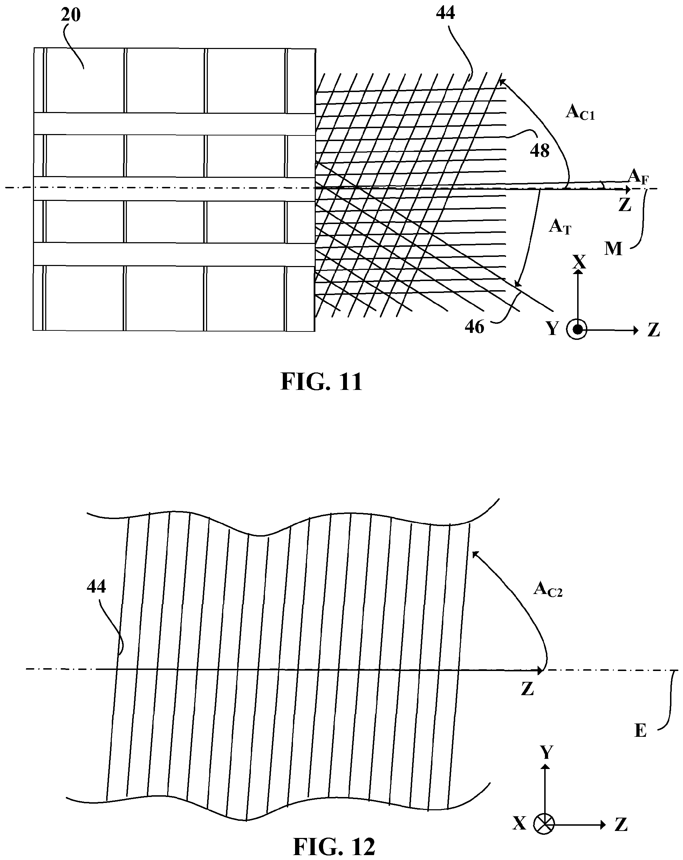

En référence à la figure 11, l'unique nappe de carcasse 34 comprend des éléments filaires de renfort de carcasse 44. Chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle $A_{C1}$ supérieur ou égal à 55°, de préférence allant de 55° à 80° et plus préférentiellement de 60° à 70°, avec la direction circonférentielle Z du pneumatique 10 dans le plan médian M du pneumatique 10', autrement dit dans le sommet 12. En référence à la figure 12 qui est une vue simplifiée où, compte tenu de l'échelle, tous les éléments filaires de renfort de carcasse 44 sont représentés parallèles les uns aux autres, chaque élément filaire de renfort de carcasse 44 fait un angle $A_{C2}$ supérieur ou égal à 85° avec la direction circonférentielle Z du pneumatique 10' dans le plan circonférentiel équatorial E du pneumatique 10', autrement dit dans chaque flanc 22.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, $A_{C1}$=+67° et $A_{C2}$=+90°.

En référence à la figure 11, l'unique nappe de travail 18 comprend plusieurs éléments filaires de renfort de travail 46. Les éléments filaires de renfort de travail 46 sont agencés côte à côte sensiblement parallèlement les uns aux autres. Chaque élément filaire de renfort de travail 46 s'étend axialement d'une extrémité axiale de l'armature de travail 15 du pneumatique 10 à l'autre extrémité axiale de l'armature de travail 15 du pneumatique 10. Chaque élément filaire de renfort de travail 46 fait un angle $A_T$ supérieur ou égal à 10°, de préférence allant de 30° à 50° et plus préférentiellement de 35° à 45° avec la direction circonférentielle Z du pneumatique 10' dans le plan médian M. Compte tenu de l'orientation définie précédemment, $A_T$=-40

L'unique nappe de frettage 19 comprend au moins un élément filaire de renfort de frettage 48. En l'espèce, la nappe de frettage 19 comprend un unique élément filaire de renfort de frettage 48 enroulé continûment sur une largeur axiale $L_F$ du sommet 12 du pneumatique 10' de sorte que la distance axiale entre deux enroulements adjacents soit égale à 1,3 mm. Avantageusement, la largeur axiale $L_F$ est inférieure à la largeur $L_T$ de la nappe de travail 18. L'élément filaire de renfort de frettage 48 fait un angle $A_F$ strictement inférieur à 10° avec la direction circonférentielle Z du pneumatique 10', de préférence inférieur ou égal à 7°, et plus préférentiellement inférieur ou égal à 5°. En l'espèce, $A_F$=+5°.

La nappe de frettage 19 présente un module sécant en traction égal à 430 daN.mm$^{-1}$ pour une force égale à 15% de la force à rupture de la nappe de frettage. La force à rupture de la nappe de frettage est égale à 69 daN.mm$^{-1}$.

On notera que les éléments filaires de renfort de carcasse 44, de travail 46 et de frettage 48 sont agencés, dans le sommet 12, de façon à définir, en projection sur le plan circonférentiel équatorial E selon la direction radiale du pneumatique, un maillage triangulaire. Ici, l'angle $A_F$ et le fait que l'orientation de l'angle $A_T$ et l'orientation de l'angle $A_{C1}$ soient opposées par rapport à la direction circonférentielle Z du pneumatique 10', permettent d'obtenir ce maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m$^{-1}$ dans un sens puis retordus ensemble à 240 tours.m$^{-1}$ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

L'élément filaire de renfort de frettage 48 est obtenu par noyage du câble 50 ou 50' dans une matrice élastomérique à base de la composition élastomérique de la nappe de frettage 19.

On fabrique le pneumatique 10' en mettant en œuvre un procédé similaire au procédé de fabrication du pneumatique 10. Afin de former le maillage triangulaire du pneumatique 10', on met en œuvre un procédé d'assemblage spécifique tel que décrit dans EP1623819 ou bien dans FR1413102.

## ESSAIS COMPARATIFS

On a testé différents câbles A à V destinés au renforcement d'un pneumatique pour véhicules de tourisme et différents câbles A' à I' destinés au renforcement d'un pneumatique pour véhicules industriels.

Parmi les câbles A à V, on distingue :

- les câbles A, F et J non conformes à l'invention et obtenus en mettant en œuvre un procédé classique d'assemblage par câblage de l'état de la technique,
- le câble V correspondant au câble métallique 3.26 décrit dans WO2016/166056, ce câble V étant non conforme à l'invention et obtenu en mettant en œuvre un procédé classique d'assemblage par retordage de l'état de la technique,
- les câbles B, D, G, I, K, S et T non conformes à l'invention et obtenus en mettant en œuvre le procédé de l'état de la technique décrit dans WO2016083265 et WO2016083267,
- les câbles C, E, H, L, M, N, O, P, Q et R conformes à l'invention et obtenus en mettant en œuvre le procédé de l'état de la technique décrit dans WO2016083265 et WO2016083267,les câbles Q et O étant respectivement les câbles 50 et 50' décrits précédemment..

Parmi les câbles A' à I', on distingue :

- les câbles A' et E' non conformes à l'invention et obtenus en mettant en œuvre un procédé classique d'assemblage par câblage ou retordage de l'état de la technique,
- les câbles B', F' et H' non conformes à l'invention et obtenus en mettant en œuvre le procédé de l'état de la technique décrit dans WO2016083265 et WO2016083267,
- le câble D' non conforme à l'invention et obtenu en mettant en œuvre un procédé de préformation de chaque élément filaire métallique suivi d'une étape d'assemblage par câblage,
- les câbles C', G' et I' conformes à l'invention et obtenus en mettant en œuvre le procédé de l'état de la technique décrit dans WO2016083265 et WO2016083267.

Pour chaque câble métallique, on a mesuré le diamètre Df de chaque élément filaire métallique exprimé en millimètres, le nombre N d'éléments filaires métalliques, le facteur de pas K égal au rapport du pas P sur Df, l'angle d'hélice α exprimé en degrés, le pas P de chaque élément filaire métallique exprimé en millimètres, le diamètre d'hélice Dh exprimé en millimètres, le diamètre de voûte Dv exprimé en millimètres, le rayon de courbure d'hélice Rf exprimé en millimètres, le rapport Rf/Df, le rapport Dv/Df, l'allongement structural As exprimé en %, le diamètre D du câble exprimé en millimètres et un indicateur de compressibilité $\varepsilon_c$ déterminé comme suit.

L'indicateur de compressibilité $\varepsilon_c$ est mesuré sur une éprouvette à section rectangulaire de section 12 mm × 8 mm et de hauteur égale à 20 mm. L'éprouvette comprend une matrice élastomérique présentant, à cuit, un module égale à 10 MPa (ici un module représentatif du module des compositions utilisés en pneumatique - dans d'autres domaines, d'autres modules pourraient être envisagés) et dans laquelle est noyée le câble métallique à tester de façon à ce que l'axe du câble soit confondu avec l'axe de symétrie de l'éprouvette. Deux plaques d'appui de section 20 mm × 20 mm sont collées sur chaque face de la section rectangulaire de l'éprouvette, chaque face ayant été soigneusement préalablement meulée. On relie alors chaque plaque d'appui à une machine de test à traverse mobile utilisable en traction ou en compression (machine de Zwick ou Instron par exemple). L'éprouvette (en appui sur l'une des plaques de 20 mm × 20 mm) est posée sur un support de diamètre de 30 mm présentant une face d'appui horizontale, support lui-même fixé sur une traverse inférieure de la machine de test. Sous la traverse mobile de la machine est placé un capteur d'effort portant un second support de diamètre égal à 30 mm dont la face d'appui, elle aussi horizontale, est positionnée en vis-à-vis de la première. La distance qui sépare les deux supports horizontaux est donc variable au gré du déplacement de la traverse mobile. Cette distance, prend pour première valeur, une valeur telle que l'éprouvette peut prendre place sans effort entre les deux supports de diamètre 30 mm, puis prend une seconde valeur pour exercer une pré-charge de 0,1N, puis va diminuer à une vitesse de 3 mm / mn jusqu'à la fin du test, stoppé après un écrasement de l'éprouvette de 10% de sa hauteur initiale. La courbe force-compression est obtenue à 20°C. A la valeur de l'effort de l'éprouvette est retranchée la contribution de l'effort de la matrice aux déformations correspondantes (à partir d'une courbe force-compression d'un même bloc en matrice seule). A la valeur de l'effort maximale, de cette nouvelle courbe, correspond la valeur de déformation maximale où le flambage a lieu, déformation critique au-delà de laquelle l'effort décroit quand l'éprouvette fléchie. L'indicateur de compressibilité $\varepsilon_c$ est égal à la valeur de cette déformation critique relevée.

Les résultats de toutes ces mesures sont rassemblés dans les tableaux 1 et 2 ci-dessous. Concernant l'indicateur de compressibilité $\varepsilon_c$, on estime qu'une compressibilité longitudinale satisfaisante est obtenue pour des valeurs de $\varepsilon_c \geq 5$. La compressibilité longitudinale est d'autant plus favorisée que la valeur $\varepsilon_c$ est grande. La mention NT indique que le câble n'a pas été testé.

En comparant les câbles A, B et C, on note que le câble A présente une compressibilité longitudinale inférieure et un diamètre D supérieur au câble C. En effet, le rayon de courbure d'hélice Rf du câble A est relativement élevé ce qui le rend sensible au flambage. Bien que le câble B présente un diamètre D inférieur au câble C, sa compressibilité longitudinale est insuffisante, notamment car le rayon de courbure d'hélice Rf et le diamètre de voûte Dv sont trop petits ce qui rapproche trop les éléments filaires métalliques de l'axe du câble et les rend plus susceptibles de flamber.

En comparant les câbles D, E et V on note que, bien que le câble D présente un rayon de courbure d'hélice Rf adapté, le diamètre de voûte est trop petit, rendant certes le câble très peu encombrant mais néanmoins très peu compressible longitudinalement contrairement au câble E conforme à l'invention. Le câble V, bien que présentant un diamètre relativement petit du fait du nombre réduit d'éléments filaires métalliques, ne présente pas une compressibilité longitudinale suffisante.

En comparant les câbles F, G, H, I, on note que les câbles G et I présentent certes des diamètres relativement petits mais sont néanmoins très peu compressibles longitudinalement en raison d'un diamètre de voûte Dv particulièrement petit et dans une moindre mesure pour le câble I, en raison d'un rayon de courbure d'hélice Rf relativement élevé. Le câble F présente le double défaut d'un diamètre relativement élevé et d'une compressibilité longitudinale faible.

En comparant les câbles J, K, L, M, N et O, on note que, en raison d'un rayon de courbure d'hélice Rf relativement élevé, le câble J présente une compressibilité longitudinale faible. On note que pour un nombre de fils supérieur ou égal à celui du câble J, les câbles M, N et O présentent tous un diamètre inférieur et une compressibilité bien meilleure. Bien que le câble K présente un diamètre relativement petit, le câble K n'est que peu compressible longitudinalement en raison de son diamètre de voûte trop petit.

En comparant les câbles S et T, bien que présentant des diamètres D petits, sont très peu compressibles longitudinalement contrairement aux câbles P, Q et surtout R, ce dernier présentant un diamètre proche de celui du câble S tout en présentant une compressibilité longitudinale bien plus élevée.

En comparant les câbles A', B', C' et D', on note que le câble A' présente un diamètre D bien trop élevé et une compressibilité longitudinale trop faible. Les câbles B' et D', s'ils sont plus petits, présentent le même défaut d'être très peu compressible en raison d'un diamètre de voûte Dv trop petit et de nécessiter, pour le câble D', des étapes de préformations des éléments filaires métalliques. Le câble C', même s'il présente un diamètre plus élevé que celui des câbles B' et D', présente une bonne compressibilité longitudinale.

En comparant les câbles E', F', G', H' et I', on note que les câbles E' et H' présentent un diamètre D bien trop élevé, surtout le câbles H'. Le câble F' présente un diamètre relativement petit mais au prix d'une compressibilité longitudinale insuffisante. Au contraire, les câbles G' et I' présentent un excellent compromis entre diamètre et compressibilité longitudinale.

**Tableau 1**

|   | Df | N | K | $\alpha$ | P | Dh | Dv | Rf | Rf/Df | Dv/Df | As | D | $\varepsilon_c$ |
|---|---|---|---|---|---|---|---|---|---|---|---|---|---|
| **A** | 0,20 | 5 | 45 | 11,8 | 9 | 0,60 | 0,40 | 7,16 | 35,8 | 1,99 | 1,4 | 0,80 | <5 |
| **B** | 0,20 | 5 | 18 | 20,2 | 3,6 | 0,42 | 0,22 | 1,77 | 8,8 | 1,11 | 1,6 | 0,62 | <5 |
| **C** | 0,20 | 5 | 25 | 17,9 | 5 | 0,51 | 0,31 | 2,72 | 13,6 | 1,57 | 2,5 | 0,78 | >5 |
| **D** | 0,26 | 6 | 25 | 15,7 | 6,4 | 0,57 | 0,31 | 3,91 | 15,1 | 1,20 | 0,4 | 0,82 | <5 |
| **E** | 0,26 | 6 | 25 | 20,2 | 6,4 | 0,75 | 0,49 | 3,15 | 12,1 | 1,88 | 2,8 | 0,99 | >5 |
| **F** | 0,30 | 3 | 45 | 12,0 | 13,5 | 0,91 | 0,61 | 10,58 | 35,3 | 2,04 | 1,9 | 1,22 | <5 |
| **G** | 0,30 | 3 | 25 | 15,1 | 7,5 | 0,64 | 0,34 | 4,75 | 15,8 | 1,15 | 2,4 | 0,94 | <5 |
| **H** | 0,30 | 3 | 27 | 18,5 | 8 | 0,85 | 0,55 | 4,24 | 14,1 | 1,84 | 4,4 | 1,15 | >10 |
| **I** | 0,30 | 3 | 18 | 20,1 | 5,4 | 0,63 | 0,33 | 2,67 | 8,9 | 1,10 | 4,1 | 0,93 | <5 |
| **J** | 0,32 | 4 | 45 | 11,9 | 14,5 | 0,97 | 0,65 | 11,45 | 35,8 | 2,04 | 1,7 | 1,30 | <5 |
| **K** | 0,32 | 4 | 25 | 15,2 | 8 | 0,69 | 0,37 | 5,04 | 15,7 | 1,16 | 1,9 | 1,01 | <5 |
| **L** | 0,32 | 3 | 25 | 17,9 | 8 | 0,82 | 0,50 | 4,36 | 13,6 | 1,57 | 3,9 | 1,15 | 9 |
| **M** | 0,32 | 4 | 25 | 18,1 | 8 | 0,83 | 0,51 | 4,32 | 13,5 | 1,60 | 3,4 | 1,15 | 6 |
| **N** | 0,32 | 5 | 25 | 18,0 | 8 | 0,83 | 0,51 | 4,34 | 13,6 | 1,59 | 2,6 | 1,15 | 5,5 |
| **O** | 0,32 | 6 | 25 | 17,9 | 8 | 0,82 | 0,50 | 4,36 | 13,6 | 1,57 | 1,6 | 1,15 | 5,2 |
| **P** | 0,32 | 4 | 25 | 19,3 | 8 | 0,89 | 0,57 | 4,09 | 12,8 | 1,79 | 4,1 | 1,20 | 6,5 |
| **Q** | 0,32 | 4 | 25 | 20,4 | 8 | 0,95 | 0,63 | 3,90 | 12,2 | 1,97 | 4,8 | 1,27 | 7 |
| **R** | 0,32 | 4 | 25 | 16,4 | 8 | 0,75 | 0,43 | 4,71 | 14,7 | 1,34 | 2,5 | 1,07 | 5,5 |
| **S** | 0,32 | 4 | 25 | 15,2 | 8 | 0,69 | 0,37 | 5,04 | 15,7 | 1,16 | 1,9 | 1,01 | 3,5 |
| **T** | 0,32 | 4 | 25 | 13,3 | 8 | 0,60 | 0,28 | 5,69 | 17,8 | 0,88 | 1,1 | 0,93 | 3,5 |
| **V** | 0,26 | 3 | 29 | 9,2 | 7,5 | 0,39 | 0,13 | 7,57 | 29,1 | 0,49 | 0,5 | 0,65 | <5 |

**Tableau 2**

|   | Df | N | K | $\alpha$ | P | Dh | Dv | Rf | Rf/Df | Dv/Df | As | D | $\varepsilon_c$ |
|---|---|---|---|---|---|---|---|---|---|---|---|---|---|
| **A'** | 0,38 | 5 | 45 | 12,0 | 17,1 | 1,16 | 0,78 | 13,40 | 35,3 | 2,04 | 1,5 | 1,54 | <5 |
| **B'** | 0,38 | 5 | 25 | 15,0 | 9,5 | 0,81 | 0,43 | 6,05 | 15,9 | 1,13 | 1,1 | 1,19 | <5 |
| **C'** | 0,38 | 5 | 25 | 19,9 | 9,5 | 1,10 | 0,72 | 4,71 | 12,4 | 1,90 | 3,7 | 1,47 | >5 |
| **D'** | 0,38 | 5 | 18 | 21,7 | 6,7 | 0,84 | 0,46 | 3,12 | 8,2 | 1,22 | 2,3 | 1,22 | <5 |

(suite)

|  | Df | N | K | $\alpha$ | P | Dh | Dv | Rf | Rf/Df | Dv/Df | As | D | $\varepsilon_c$ |
|---|---|---|---|---|---|---|---|---|---|---|---|---|---|
| **E'** | 0,46 | 5 | 45 | 11,4 | 20,5 | 1,39 | 0,93 | 16,06 | 34,9 | 2,02 | 1,5 | 1,84 | <5 |
| **F'** | 0,46 | 5 | 25 | 13,4 | 11,4 | 0,97 | 0,51 | 7,26 | 15,8 | 1,11 | 1,1 | 1,43 | <5 |
| **G'** | 0,46 | 5 | 25 | 18,8 | 11,4 | 1,32 | 0,86 | 5,65 | 12,3 | 1,87 | 3,8 | 1,78 | >5 |
| **H'** | 0,46 | 5 | 23 | 23,7 | 10,4 | 1,54 | 1,08 | 4,34 | 9,4 | 2,34 | 6,8 | 2,05 | NT |
| **I'** | 0,46 | 5 | 23 | 19,9 | 10,4 | 1,28 | 0,82 | 4,93 | 10,7 | 1,78 | 4,1 | 1,75 | >5 |

## Revendications

1. Câble (50, 50') comprenant une unique couche (52) d'éléments filaires métalliques (54) enroulés en hélice, chaque élément filaire métallique (54) de la couche (52) décrivant, lorsque le câble (50, 50') s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est égale à la moitié du diamètre d'hélice Dh et est sensiblement constante et égale pour tous les éléments filaires métalliques (54) de la couche (52), les éléments filaires métalliques (54) définissant une voûte interne (58) du câble de diamètre Dv, chaque élément filaire métallique (54) présentant un diamètre Df et un rayon de courbure d'hélice Rf défini par Rf=P/($\pi \times$ Sin($2\alpha$)) avec P le pas de chaque élément filaire métallique exprimé en millimètres et $\alpha$ l'angle d'hélice de chaque élément filaire métallique (54), **caractérisé en ce que,** Dh, Dv, Df et Rf étant exprimés en millimètres :

$$9 \leq Rf / Df \leq 30,$$

et

$$1,30 \leq Dv / Df \leq 2,10$$

avec

$$Dv=Dh-Df.$$

2. Câble (50, 50') selon la revendication précédente, dans lequel $11 \leq Rf / Df \leq 19$,

3. Câble (50, 50') selon l'une quelconque des revendications précédentes, dans lequel $1,30 \leq Dv / Df \leq 2,05$, de préférence $1,30 \leq Dv / Df \leq 2,00$.

4. Câble (50, 50') selon l'une quelconque des revendications précédentes, dans lequel le rayon de courbure d'hélice Rf est tel que 2 mm $\leq$ Rf $\leq$ 7 mm, de préférence 2 mm $\leq$ Rf $\leq$ 5 mm et plus préférentiellement 3 mm $\leq$ Rf $\leq$ 5 mm.

5. Câble (50, 50') selon l'une quelconque des revendications précédentes, dans lequel le diamètre d'hélice Dh de chaque élément filaire métallique (54) est tel que 0,40 mm $\leq$ Dh $\leq$ 1,50 mm, de préférence 0,50 mm $\leq$ Dh $\leq$ 1,00 mm et plus préférentiellement 0,70 mm $\leq$ Dh $\leq$ 1,00 mm.

6. Câble (50, 50') selon l'une quelconque des revendications précédentes, dans lequel Df est tel que 0,10 mm $\leq$ Df $\leq$ 0,50 mm, de préférence 0,20 mm $\leq$ Df $\leq$ 0,35 mm et plus préférentiellement 0,25 mm $\leq$ Df $\leq$ 0,33 mm.

7. Câble (50, 50') selon l'une quelconque des revendications précédentes, dans lequel Dv est tel que Dv $\geq$ 0,46 mm, de préférence 0,46 mm $\leq$ Dv $\leq$ 0,70 mm.

**8.** Câble (50, 50') selon l'une quelconque des revendications précédentes, dans lequel chaque élément filaire métallique (54) est enroulé à un pas P tel que 3 mm ≤ P ≤ 15 mm, de préférence 3 mm ≤ P ≤ 9 mm.

**9.** Câble (50, 50') selon l'une quelconque des revendications précédentes, présentant un diamètre D tel que D ≤ 2,00 mm, de préférence 0,75 mm ≤ D ≤ 1,40 mm et plus préférentiellement 1,00 mm ≤ D ≤ 1,30 mm.

**10.** Câble (50, 50') selon l'une quelconque des revendications précédentes, dans lequel le rapport K du pas P sur le diamètre Df de chaque élément filaire métallique (54), P et Df étant exprimés en millimètres, est tel que 19 ≤ K ≤ 44.

**11.** Câble (50, 50') selon l'une quelconque des revendications précédentes, dans lequel l'angle d'hélice α de chaque élément filaire métallique (54) est tel que 13° ≤ α ≤ 21°.

**12.** Câble (50, 50') selon l'une quelconque des revendications précédentes, présentant un allongement structural As tel que As ≥ 1%, de préférence tel que As ≥ 2,5%, plus préférentiellement As ≥ 3% et encore plus préférentiellement tel que 3% ≤ As ≤ 5,5%, l'allongement structural As étant déterminé en appliquant la norme ASTM D2969-04 de 2014 au câble de façon à obtenir une courbe force-allongement, l'allongement structural As étant égal à l'allongement, en %, correspondant à la pente maximale de la courbe force-allongement.

**13.** Utilisation d'un câble (50, 50') selon l'une quelconque des revendications précédentes, pour le renforcement d'un article ou produit semi-fini comprenant une matrice élastomérique dans laquelle est noyé le câble.

**14.** Pneumatique (10, 10') comprenant un élément filaire de renfort obtenu par noyage d'un câble (50, 50') selon l'une quelconque des revendications 1 à 12 dans une matrice élastomérique.

**15.** Pneumatique (10, 10') selon la revendication précédente, comprenant un sommet (12) comprenant une bande de roulement (20) et une armature de sommet (14), deux flancs (22), deux bourrelets (24), chaque flanc (22) reliant chaque bourrelet (24) au sommet (12), l'armature de sommet (14) s'étendant dans le sommet (12) selon une direction circonférentielle (Z) du pneumatique (10, 10'), le pneumatique (10, 10') comprenant une armature de carcasse (32) ancrée dans chacun des bourrelets (24) et s'étendant dans les flancs (22) et dans le sommet (12), l'armature de sommet (14) étant radialement intercalée entre l'armature de carcasse (32) et la bande de roulement (20), l'armature de sommet (14) comprenant un élément filaire de renfort (48) obtenu par noyage d'un câble (50, 50') selon l'une quelconque des revendications 1 à 12 dans une matrice élastomérique.

**Patentansprüche**

**1.** Seil (50), umfassend eine einzelne Schicht (52) aus schraubenförmig gewickelten Metalldrahtelementen (54), wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleicht ist, **dadurch gekennzeichnet, dass**:

- 5 GPa ≤ $M_1$ ≤ 16 GPa und
- 40 GPa ≤ $M_2$ ≤ 160 GPa und
- 3 ≤ $M_2/M_1$,

wobei und $M_2$ in GPa ausgedrückt sind, wobei:

- = $10/A_{100}$, wobei:

- $A_{100}$ die in % ausgedrückte Dehnung des Seils unter einer Belastung von 100 MPa ist, und

- $M_2 = [(F_{40} - F_{30})/(A_{40} - A_{30})]/S$, wobei:

- S der in $mm^2$ ausgedrückte Querschnitt ist, so dass S = Ml/Mv, wobei:

- MI die in g pro m Seil ausgedrückte lineare Dichte der Metalldrahtelemente (54) ist,
- Mv die in g pro $cm^3$ ausgedrückte Massendichte der Metalldrahtelemente (54) ist,

- $F_{40}$ die in daN ausgedrückte Kraft ist, die 40 % der theoretischen Maximalkraft $F_t$ des Seils entspricht,
- $F_{30}$ die in daN ausgedrückte Kraft ist, die 30 % der theoretischen Maximalkraft $F_t$ des Seils entspricht,
- $A_{40}$ die in % ausgedrückte Dehnung des Seils bei 40 % der theoretischen Maximalkraft $F_t$ des Seils ist,
- $A_{30}$ die in % ausgedrückte Dehnung des Seils bei 30 % der theoretischen Maximalkraft $F_t$ des Seils ist,
wobei $F_t = MI \times Rm/Mv$, ausgedrückt in daN, wobei Rm die in MPa ausgedrückte durchschnittliche mechanische Bruchfestigkeit der die einzelne Schicht (52) bildenden Metalldrahtelemente (54) ist.

2. Seil (50) nach dem vorangehenden Anspruch, wobei $6 \leq M_2/M_1$, vorzugsweise $8 \leq M_2/M_1$ und besonders vorzugsweise $10 \leq M_2/M_1$.

3. Seil (50) nach einem der vorangehenden Ansprüche, wobei $M_2/M_1 \leq 19$, vorzugsweise $M_2/M_1 \leq 17$ und besonders vorzugsweise $M_2/M_1 \leq 15$.

4. Seil (50) nach einem der vorangehenden Ansprüche, mit einer strukturellen Dehnung As, die so ist, dass $As \geq 1$ %, vorzugsweise $As \geq 2,5$ %, besonders vorzugsweise $As \geq 3$ % und ganz besonders vorzugsweise $3 \% \leq As \leq 5,5$ %, wobei die strukturelle Dehnung As durch Anwendung der Norm ASTM D2969-04 von 2014 auf das Seil bestimmt wird, um eine Kraft-Dehnungs-Kurve zu erhalten, wobei die strukturelle Dehnung As gleich der Dehnung in % ist, die der maximalen Steigung der Kraft-Dehnungs-Kurve entspricht.

5. Gefülltes Seil (51), umfassend eine einzelne Schicht (52) aus schraubenförmig gewickelten Metalldrahtelementen (54), wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleich ist, wobei die Metalldrahtelemente (54) ein inneres Gewölbe (58) des Seils (51) definieren, wobei das gefüllte Seil (51) ein Füllmaterial (53) des inneren Gewölbes (58) umfasst, das auf einer elastomeren Zusammensetzung basiert und sich im inneren Gewölbe (58) des gefüllten Seils (51) befindet, **dadurch gekennzeichnet, dass**:

    - $5 \text{ GPa} \leq M_{c1} \leq 30 \text{ Gpa}$ und
    - $40 \text{ GPa} \leq M_{c2} \leq 150 \text{ GPa}$ und
    - $3 \leq M_{C2}/M_{C1}$,

    wobei $M_{c1}$ und $M_{c2}$ in GPa ausgedrückt sind, wobei:

    - $M_{c1} = 10/A_{c100}$, wobei:
    - $A_{c100}$ die in % ausgedrückte Dehnung des gefüllten Seils (51) unter einer Belastung von 100 MPa ist, und
    - $M_{c2} = [(F_{c40} - F_{c30})/(A_{c40} - A_{c30})]/S$, wobei:
    - S der in $mm^2$ ausgedrückte Querschnitt ist, so dass $S = MI/Mv$, wobei:

        - MI die in g pro m Seil ausgedrückte lineare Dichte der Metalldrahtelemente (54) ist,
        - Mv die in g pro $cm^3$ ausgedrückte Massendichte der Metalldrahtelemente (54) ist,

        - $F_{C40}$ die in daN ausgedrückte Kraft ist, die 40 % der theoretischen Maximalkraft $F_{ct}$ des Seils ohne das Füllmaterial entspricht,
        - $F_{c30}$ die in daN ausgedrückte Kraft ist, die 30 % der theoretischen Maximalkraft $F_{ct}$ des Seils ohne das Füllmaterial entspricht,
        - $A_{c40}$ die in % ausgedrückte Dehnung des gefüllten Seils bei 40 % der theoretischen Maximalkraft $F_{ct}$ des Seils ohne das Füllmaterial ist,
        - $A_{c30}$ die in % ausgedrückte Dehnung des gefüllten Seils bei 30 % der theoretischen Maximalkraft $F_{ct}$ des Seils ohne das Füllmaterial ist,
        wobei $F_{ct} = MI \times Rm/Mv$, ausgedrückt in daN, wobei Rm die in MPa ausgedrückte durchschnittliche mechanische Bruchfestigkeit der die einzelne Schicht (52) bildenden Metalldrahtelemente (54) ist.

6. Gefülltes Seil (51) nach Anspruch 5, wobei $4 \leq M_{c2}/M_{c1}$, vorzugsweise $5 \leq M_{c2}/M_{c1}$ und besonders vorzugsweise

$6 \leq M_{c2}/M_{c1}$.

7. Gefülltes Seil (51) nach Anspruch 5 oder 6, wobei $M_{c2}/M_{c1} \leq 12$, vorzugsweise $M_{c2}/M_{c1} \leq 11$ und besonders vorzugsweise $M_{c2}/M_{c1} \leq 10$.

8. Gefülltes Seil (51) nach einem der Ansprüche 5 bis 7, mit einer strukturellen Dehnung Asc, die so ist, dass Asc $\geq$ 1 %, vorzugsweise Asc $\geq$ 1,5 %, besonders vorzugsweise Asc $\geq$ 2 % und ganz besonders vorzugsweise 2 % $\leq$ Asc $\leq$ 4 %, wobei die strukturelle Dehnung Asc durch Anwendung der Norm ASTM D2969-04 von 2014 auf das gefüllte Seil bestimmt wird, um eine Kraft-Dehnungs-Kurve zu erhalten, wobei die strukturelle Dehnung Asc gleich der Dehnung in % ist, die der maximalen Steigung der Kraft-Dehnungs-Kurve entspricht.

9. Reifen (10, 10'), umfassend einen Scheitel (12), der einen Laufstreifen (20) und eine Scheitelarmatur (14) umfasst, zwei Flanken (22) und zwei Wülste (24), wobei jede Flanke (22) jede Wulst (24) mit dem Scheitel (12) verbindet, wobei sich die Scheitelarmatur (14) im Scheitel (12) in einer Umfangsrichtung (Z) des Reifens (10) erstreckt, wobei der Reifen (10) eine Karkassenbewehrung (32) umfasst, die in jeder der Wülste (24) verankert ist und sich in die Flanken (22) und den Scheitel (12) erstreckt, wobei die Scheitelarmatur (14) radial zwischen der Karkassenbewehrung (32) und dem Laufstreifen (20) eingefügt ist,

wobei die Scheitelarmatur (14) eine Umreifungsbewehrung (17) umfasst, die mindestens eine Umreifungslage (19) umfasst, die mindestens ein filamentartiges Umreifungsverstärkungselement (48) umfasst, das in eine elastomere Matrix auf Basis einer elastomeren Zusammensetzung eingebettet ist, und eine Arbeitsbewehrung (15), die mindestens eine Arbeitslage (16, 18) umfasst, die filamentartige Arbeitsverstärkungselemente (46, 47) umfasst,
wobei die Karkassenbewehrung (32) mindestens eine Karkassenlage (34) umfasst, die filamentartige Karkassenverstärkungselemente (44) umfasst,
wobei mindestens die filamentartigen Arbeitsverstärkungselemente (46, 47) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren, **dadurch gekennzeichnet, dass** das bzw. jedes filamentartige Umreifungsverstärkungselement (48) aus einem gefüllten Seil (51) gebildet ist, das eine einzelne Schicht von schraubenförmig gewickelten Metalldrahtelementen (54) umfasst, wobei die Metalldrahtelemente (54) ein inneres Gewölbe (58) des gefüllten Seils (51) definieren, wobei das gefüllte Seil (51) ein Füllmaterial (53) des inneren Gewölbes (58) umfasst, das auf der elastomeren Zusammensetzung basiert und sich im inneren Gewölbe (58) des gefüllten Seils (51) befindet, **dadurch gekennzeichnet, dass** das gefüllte Seil (51) nach der Entnahme aus dem Reifen (10; 10') einem der Ansprüche 5 bis 8 entspricht.

10. Reifen (10; 10'), umfassend einen Scheitel (12), der einen Laufstreifen (20) und eine Scheitelarmatur (14) umfasst, zwei Flanken (22) und zwei Wülste (24), wobei jede Flanke (22) jede Wulst (24) mit dem Scheitel (12) verbindet, wobei sich die Scheitelarmatur (14) im Scheitel (12) in einer Umfangsrichtung (Z) des Reifens (10) erstreckt, wobei der Reifen (10) eine Karkassenbewehrung (32) umfasst, die in jeder der Wülste (24) verankert ist und sich in die Flanken (22) und den Scheitel (12) erstreckt, wobei die Scheitelarmatur (14) radial zwischen der Karkassenbewehrung (32) und dem Laufstreifen (20) eingefügt ist,

wobei die Scheitelarmatur (14) eine Umreifungsbewehrung (17) umfasst, die mindestens eine Umreifungslage (19) umfasst, die mindestens ein filamentartiges Umreifungsverstärkungselement (48) umfasst, das in eine elastomere Matrix auf Basis einer elastomeren Zusammensetzung eingebettet ist, und eine Arbeitsbewehrung (15), die mindestens eine Arbeitslage (16, 18) umfasst, die filamentartige Arbeitsverstärkungselemente (46, 47) umfasst,
wobei die Karkassenbewehrung (32) mindestens eine Karkassenlage (34) umfasst, die filamentartige Karkassenverstärkungselemente (44) umfasst,
wobei mindestens die filamentartigen Arbeitsverstärkungselemente (46, 47) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren, wobei das bzw. jedes filamentartige Umreifungsverstärkungselement (48) aus einem gefüllten Seil (51) gebildet ist, das eine einzelne Schicht von schraubenförmig gewickelten Metalldrahtelementen (54) umfasst, wobei, wenn sich das Seil (50) in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) im Wesentlichen konstant und für alle Metalldrahtelemente (54) der Schicht (52) gleich ist, wobei die Metalldrahtelemente (54) ein inneres Gewölbe (58) des gefüllten Seils (51) definieren, wobei das gefüllte Seil (51) ein Füllmaterial (53) des inneren Gewölbes (58) umfasst, das auf der elastomeren Zusammensetzung basiert und sich im inneren Gewölbe (58) des gefüllten Seils (51) befindet, **dadurch gekennzeichnet, dass** die Umreifungslage (19) nach der Entnahme aus dem Reifen (10; 10') die folgenden Merkmale aufweist:

- $100 \text{ daN.mm}^{-1} \leq M_{n1} \leq 600 \text{ daN.mm}^{-1}$ und
- $1.000 \text{ daN.mm}^{-1} \leq M_{n2} \leq 4.500 \text{ daN.mm}^{-1}$ und
- $3 \leq M_{n2}/M_{n1}$,

wobei $M_{n1}$ und $M_{n2}$ in $\text{daN.mm}^{-1}$ ausgedrückt sind, wobei

- $M_{n1} = 250/A_{n250}$, wobei:

- $A_{n250}$ die in % ausgedrückte äquivalente Dehnung der Umreifungslage (19) unter einer Belastung von $250 \text{ daN.dm}^{-1}$ ist, $A_{n250}$ erhalten wird, indem die Kraft von $250 \text{ daN.dm}^{-1}$ durch die Dichte der filamentartigen Umreifungsverstärkungselemente (48) pro Dezimeter Umreifungslage (19) dividiert wird, um eine Einheitsbelastung zu erhalten, und indem anschließend aus einer Kraft-Dehnungs-Kurve, die durch Ziehen des gefüllten Seils (51) unter den Bedingungen der Norm ASTM D2969-04 von 2014 erhalten wird, die Dehnung des gefüllten Seils (51) unter dieser Einheitsbelastung bestimmt wird, und

- $M_{n2} = [(F_{n40} - F_{n30})/(A_{n40} - A_{n30})]$, wobei:

- $F_{n40}$ die in $\text{daN.dm}^{-1}$ ausgedrückte Kraft ist, die 40 % der theoretischen Maximalkraft $F_{nt}$ der Umreifungslage (19) entspricht,
- $F_{n30}$ die in $\text{daN.dm}^{-1}$ ausgedrückte Kraft ist, die 30 % der theoretischen Maximalkraft $F_{nt}$ der Umreifungslage (19) entspricht,
- $A_{n40}$ die in % ausgedrückte äquivalente Dehnung der Umreifungslage bei 40 % der theoretischen Maximalkraft $F_{nt}$ der Umreifungslage (19) ist, $A_{n40}$ erhalten wird, indem 40 % der theoretischen Maximalkraft $F_{nt}$ der Umreifungslage (19) durch die Dichte der filamentartigen Umreifungsverstärkungselemente (48) pro Dezimeter Umreifungslage (19) dividiert wird, um eine Einheitsbelastung bei 40 % zu erhalten, und indem anschließend aus einer Kraft-Dehnungs-Kurve, die durch Ziehen des gefüllten Seil (51) unter den Bedingungen der Norm ASTM D2969-04 von 2014 erhalten wird, die Dehnung des gefüllten Seils (51) unter dieser Einheitsbelastung bestimmt wird,
- wobei $A_{n30}$ die in % ausgedrückte äquivalente Dehnung der Umreifungslage bei 30 % der theoretischen Maximalkraft $F_{nt}$ der Umreifungslage (19) ist, wobei $A_{n30}$ erhalten wird, indem 30 % der theoretischen Maximalkraft $F_{nt}$ der Umreifungslage (19) durch die Dichte der filamentartigen Umreifungsverstärkungselemente (48) pro Dezimeter Umreifungslage (19) dividiert wird, um eine Einheitsbelastung bei 30 % zu erhalten, und indem anschließend aus einer Kraft-Dehnungs-Kurve, die durch Ziehen des gefüllten Seils (51) unter den Bedingungen der Norm ASTM D2969-04 von 2014 erhalten wird, die Dehnung des gefüllten Seils (51) unter dieser Einheitsbelastung bestimmt wird,

wobei $F_{nt} = Ml \times Rm \times d / Mv$, ausgedrückt in $\text{daN.dm}^{-1}$, wobei:

• Ml die in g pro m Seil ausgedrückte lineare Dichte der Metalldrahtelemente (54) ist,
• Mv die in g pro $cm^3$ ausgedrückte Massendichte der Metalldrahtelemente (54) ist,
• Rm die in MPa ausgedrückte durchschnittliche mechanische Bruchfestigkeit der die einzelne Schicht (52) bildenden Metalldrahtelemente (54) ist und
• d die Dichte des bzw. der filamentartigen Umreifungsverstärkungselemente in der Umreifungslage (19), ausgedrückt als Anzahl pro dm Umreifungslage (19), ist.

11. Reifen (10; 10') nach Anspruch 10, wobei $4 \leq M_{n2}/M_{n1}$, vorzugsweise $5 \leq M_{n2}/M_{n1}$ und besonders vorzugsweise $6 \leq M_{n2}/M_{n1}$.

12. Reifen (10; 10') nach Anspruch 10 oder 11, wobei $M_{n2}/M_{n1} \leq 12$, vorzugsweise $M_{n2}/M_{n1} \leq 11$ und besonders vorzugsweise $M_{n2}/M_{n1} \leq 10$.

13. Reifen (10; 10') nach einem der Ansprüche 10 bis 12, wobei die Umreifungsbewehrung eine einzelne Umreifungslage umfasst.

**14.** Reifen (10') nach einem der Ansprüche 10 bis 13, wobei die Arbeitsbewehrung eine einzelne Arbeitslage umfasst.

**15.** Reifen (10') nach dem vorangehenden Anspruch, wobei das bzw. die filamentartigen Umreifungsverstärkungselemente (48), die filamentartigen Arbeitsverstärkungselemente (46) und die filamentartigen Karkassenverstärkungselemente (44) so angeordnet sind, dass sie in der Projektion auf die äquatoriale Umfangsebene (E) in der radialen Richtung (Y) des Reifens ein dreieckiges Netz definieren.

**Claims**

**1.** Cord (50, 50') comprising a single layer (52) of helically wound metal filamentary elements (54), each metal filamentary element (54) of the layer (52) describing, when the cord (50, 50') extends in a substantially rectilinear direction, a helical path about a main axis (A) substantially parallel to the substantially rectilinear direction, such that, in a section plane substantially perpendicular to the main axis (A), the distance between the centre of each metal filamentary element (54) of the layer (52) and the main axis (A) is equal to half the helix diameter Dh and is substantially constant and identical for all the metal filamentary elements (54) of the layer (52), the metal filamentary elements (54) defining an internal enclosure (58) of the cord of diameter Dv, each metal filamentary element (54) having a diameter Df and a helix radius of curvature Rf defined by Rf=P/($\pi \times$ Sin(2a)), where P is the pitch of each metal filamentary element expressed in millimetres and $\alpha$ is the helix angle of each metal filamentary element (54), **characterized in that,** with Dh, Dv, Df and Rf being expressed in millimetres:

$$9 \leq Rf / Df \leq 30,$$

and

$$1.30 \leq Dv / Df \leq 2.10,$$

where

$$Dv=Dh-Df.$$

**2.** Cord (50, 50') according to the preceding claim, wherein $11 \leq Rf / Df \leq 19$.

**3.** Cord (50, 50') according to either one of the preceding claims, wherein $1.30 \leq Dv / Df \leq 2.05$, preferably $1.30 \leq Dv / Df \leq 2.00$.

**4.** Cord (50, 50') according to any one of the preceding claims, wherein the helix radius of curvature Rf is such that 2 mm $\leq Rf \leq 7$ mm, preferably 2 mm $\leq Rf \leq 5$ mm and more preferably 3 mm $\leq Rf \leq 5$ mm.

**5.** Cord (50, 50') according to any one of the preceding claims, wherein the helix diameter Dh of each metal filamentary element (54) is such that 0.40 mm $\leq Dh \leq 1.50$ mm, preferably 0.50 mm $\leq Dh \leq 1.00$ mm and more preferably 0.70 mm $\leq Dh \leq 1.00$ mm.

**6.** Cord (50, 50') according to any one of the preceding claims, wherein Df is such that 0.10 mm $\leq Df \leq 0.50$ mm, preferably 0.20 mm $\leq Df \leq 0.35$ mm and more preferably 0.25 mm $\leq Df \leq 0.33$ mm.

**7.** Cord (50, 50') according to any one of the preceding claims, wherein Dv is such that Dv $\geq 0.46$ mm, preferably 0.46 mm $\leq Dv \leq 0.70$ mm.

**8.** Cord (50, 50') according to any one of the preceding claims, wherein each metal filamentary element (54) is wound at a pitch P such that 3 mm $\leq P \leq 15$ mm, preferably 3 mm $\leq P \leq 9$ mm.

**9.** Cord (50, 50') according to any one of the preceding claims, having a diameter D such that D $\leq 2.00$ mm, preferably

0.75 mm $\leq$ D $\leq$ 1.40 mm and more preferably 1.00 mm $\leq$ D $\leq$ 1.30 mm.

10. Cord (50, 50') according to any one of the preceding claims, wherein the ratio K of the pitch P to the diameter Df of each metal filamentary element (54), P and Df being expressed in millimetres, is such that 19 $\leq$ K $\leq$ 44.

11. Cord (50, 50') according to any one of the preceding claims, wherein the helix angle $\alpha$ of each metal filamentary element (54) is such that 13° $\leq$ $\alpha$ $\leq$ 21°.

12. Cord (50, 50') according to any one of the preceding claims, having a structural elongation As such that As $\geq$ 1%, preferably such that As $\geq$ 2.5%, more preferably As $\geq$ 3% and even more preferably such that 3% $\leq$ As $\leq$ 5.5%, the structural elongation As being determined by applying the standard ASTM D2969-04 of 2014 to the cord so as to obtain a force-elongation curve, the structural elongation As being equal to the elongation, in %, corresponding to the maximum gradient of the force-elongation curve.

13. Use of a cord (50, 50') according to any one of the preceding claims for reinforcing a semifinished product or article comprising an elastomeric matrix in which the cord is embedded.

14. Tyre (10, 10') comprising a filamentary reinforcing element obtained by embedding a cord (50, 50') according to any one of Claims 1 to 12 in an elastomeric matrix.

15. Tyre (10, 10') according to the preceding claim, comprising a crown (12) comprising a tread (20) and a crown reinforcement (14), two sidewalls (22), two beads (24), each sidewall (22) connecting each bead (24) to the crown (12), the crown reinforcement (14) extending in the crown (12) in a circumferential direction (Z) of the tyre (10, 10'), the tyre (10, 10') comprising a carcass reinforcement (32) that is anchored in each of the beads (24) and extends in the sidewalls (22) and in the crown (12), the crown reinforcement (14) being radially interposed between the carcass reinforcement (32) and the tread (20), the crown reinforcement (14) comprising a filamentary reinforcing element (48) obtained by embedding a cord (50, 50') according to any one of Claims 1 to 12 in an elastomeric matrix.

$L_T/2$

$L_F/2$

10

20

12

14

19 17

16

15

18

32

22

34

42

40

30

38

28

24

26

H/2

M

E

FIG. 1

H/2

Y

Z

X

**FIG. 2**

**FIG. 3**

FIG. 4

FIG. 5

**F (daN)**

FIG. 6

As (%)

A (%)

**dF/dA (N/%)**

FIG. 7

As (%)

A (%)

FIG. 8

FIG. 9

**FIG. 10**

**FIG. 11**

**FIG. 12**

## RÉFÉRENCES CITÉES DANS LA DESCRIPTION

**Documents brevets cités dans la description**

- WO 2016166056 A
- WO 2016083265 A
- WO 2016083267 A
- EP 0548539 A
- EP 1000194 A
- EP 0622489 A
- WO 2012055677 A
- JP 2007092259 B
- WO 2007128335 A
- JP H06346386 B
- EP 0143767 A
- US 2007006957 A
- EP 1623819 A
- FR 1413102